# EUROPEAN PATENT SPECIFICATION

(11) **EP 4 055 878 B1**
(45) Date of publication and mention of the grant of the patent: **09.07.2025**
(21) Application number: 20885447.1
(22) Date of filing: 07.11.2020
(51) Int. Cl.: H04W 8/00, H04W 24/02, H04B 7/26, H04W 88/04, H04W 92/18

(54) **METHODS, APPARATUS, AND SYSTEMS FOR COORDINATED MULTIPLE RELAY LINK WIRELESS COMMUNICATION WITH UE COOPERATION**
VERFAHREN, VORRICHTUNG UND SYSTEME ZUR KOORDINIERTEN DRAHTLOSEN KOMMUNIKATION MIT MEHREREN RELAISVERBINDUNGEN MIT BENUTZERGERÄTEKOOPERATION
PROCÉDÉS, APPAREIL ET SYSTÈMES DE COMMUNICATION SANS FIL À LIAISONS RELAIS MULTIPLES COORDONNÉES AVEC COOPÉRATION D'UE

(30) Priority: 07.11.2019 US 201962932211 P; 03.11.2020 US 202017087733
(43) Date of publication of application: 14.09.2022
(73) Proprietor: Huawei Technologies Co., Ltd., Shenzhen, Guangdong 518129 (CN)
(72) Inventor: XU, Hua, Ottawa, Ontario K2M 1N6 (CA); MA, Jianglei, Ottawa, Ontario K2M 2W5 (CA); ZHANG, Liqing, Ottawa, Ontario K2G 6T6 (CA)
(74) Representative: Gill Jennings & Every LLP
(86) International application number: PCT/CN2020/127359
(87) International publication number: WO 2021/089029

(56) References cited:
- EP-A1- 3 273 745
- WO-A1-2015/074270
- WO-A1-2017/026970
- WO-A1-2018/166579
- WO-A1-2018/171580
- WO-A1-2021/098804
- CN-A- 107 534 831
- US-A1- 2018 206 176
- HUAWEI ET AL: "Further views on Rel-17 work area on NR sidelink enhancements for V2X and other use cases", vol. TSG RAN, no. Newport Beach, USA; 20190916 - 20190920, 9 September 2019 (2019-09-09), pages 1 - 13, XP051782380, Retrieved from the Internet <URL:http://www.3gpp.org/ftp/tsg_ran/TSG_RAN/TSGR_85/Docs/RP-191831.zip> [retrieved on 20190909]
- HUAWEI, HISILICON: "Sidelink Support & Enhancements for NR", 3GPP DRAFT; R1-167207, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Gothenburg, Sweden; 20160822 - 20160826, 21 August 2016 (2016-08-21), Mobile Competence Centre ; 650, route des Lucioles ; F-06921 Sophia-Antipolis Cedex ; France, XP051140575

## Description

### FIELD

This application relates generally to communications in a wireless communication network, and in particular to communications that involve multiple coordinated relay links and User Equipment (UE) cooperation.

### BACKGROUND

In Long Term Evolution (LTE), Device to Device (D2D) techniques in which UEs communicate directly with each other were studied and specified. Research focus in LTE D2D was primarily on the communications between the D2D devices. For New Radio (NR) Vehicle to anything (V2X) scenarios, D2D-related research is focused on "Uu link" transmissions between a gNodeB (gNB) and UEs, and on sidelink (SL) transmissions between UEs.

UE cooperation is a communication technique that focuses on cooperative procedures among UEs in a group of UEs. UE cooperation can be used to enhance system throughout, coverage, and capacity, and may also improve communication latency and reliability. UE cooperation can benefit scenarios such as V2X, as well as others such as enhanced Mobile Broadband (eMBB) and Ultra-Reliable Low Latency Communication (URLLC).

UE cooperation may be achieved by a group of UEs helping each other with either or both of Uu link transmissions and sidelink transmissions. UE cooperation involves interactions among the UEs in a group for the purpose of transmission and reception.

Relay is another technology relevant to the above scenarios, and is widely used to improve the coverage of a wireless access network. A relay node is mainly deployed by operators at a fixed site. So-called "UE relay" provided a more flexible alternative. There are different types of UE relays, including Layer 2 (L2) and Layer 3 (L3) relays. Some current mobile relay techniques are used only to satisfy urgent needs such as basic public safety, where the data rate is low and the latency requirement is not very high.

Other relay-based techniques that are more generally suited to various scenarios or applications and to potentially improving communication system performance may be desirable.
WO2015074270A1 provides a resource scheduling, UE coordination scheduling method, device and system.
The publication by Huawei et al. titled "Further views on Rel-17 work area on NR sidelink enhancements for V2X and other use cases" vol. TSG RAN, no. Newport Beach, USA; 20190916 - 20190920, (20190909), pages 1 - 13, 3GPP Draft; RP-191831, 3rd Generation Partnership Project (3GPP), Mobile Competence Centre ; 650, Route Des Lucioles ; F-06921 Sophia-Antipolis Cedex ; France, URL: http://www.3gpp.org/ftp/tsg_ran/TSG_RAN/TSGR_85/Docs/RP-191831.zip discusses views on Rel-17 work area on NR sidelink enhancement for 5G V2X and other use cases.
US2018206176A1 discloses methods and apparatus for enabling high data rate relay operation using the D2D air interface including a User Equipment for transmitting and receiving data via a sidelink interface under control of an Evolved Node B (eNB).
EP3273745A1 discloses a method and an apparatus for selecting a relay in D2D communication.

### SUMMARY

Supporting multiple relay links, and coordination or cooperation between those links, may be viable for such purposes as improving system performance in latency or throughput for emerging and important applications. Techniques that involve coordination between relay UEs, or more generally between multiple relay links, to improve relay link and system performance are rare, especially for usage cases or scenarios such as in-coverage and out-of-coverage scenarios.

According to appended claim 1, an aspect of the present disclosure relates to a method for configuring multiple user equipment, UE, relay links for a UE.

According to appended claim 12, an aspect provides an apparatus.

According to appended claim 13, a computer program product is provided in accordance with a further aspect.

Other aspects and features of embodiments of the present disclosure will become apparent to those ordinarily skilled in the art upon review of the following description.

### BRIEF DESCRIPTION OF THE DRAWINGS

For a more complete understanding of the present embodiments, and the advantages thereof, reference is now made, by way of example, to the following descriptions taken in conjunction with the accompanying drawings, in which:
Fig. 1 illustrates an example communication system in which aspects of the present disclosure are implemented in some embodiments;
Fig. 2 is a block diagram of another example communication system, illustrating multiple relay links;
Fig. 3 is a block diagram of another example communication system, illustrating another multiple relay link scenario;
Figs. 4 and 5 are block diagrams of further example communication systems illustrating additional multiple relay link scenarios;
Figs. 6 and 7A are block diagrams of further example communication systems illustrating additional multiple relay link scenarios that involve "helping" remote UEs;
Fig. 7B is a block diagram of another example communication system illustrating multi-hop UE-to-UE relay links;
Fig. 8 is a flow chart illustrating a method according to an embodiment;
Fig. 9 is a flow chart illustrating a method according to another embodiment;
Fig. 10 is a block diagram of another example communication system, illustrating a multiple relay link scenario similar to Fig. 2 but with addition of a helping remote UE;
Fig. 11 illustrates examples of Cyclic Redundancy Check (CRC) scrambling for Downlink Control Information (DCI), encoded bit scrambling for DCI, and Physical Downlink Control Channel (PDCCH) Demodulation Reference Signal (DMRS) generation;
Fig. 12 illustrates examples of CRC scrambling for Physical Downlink Shared Channel (PDSCH), encoded bit scrambling for PDSCH, and PDSCH DMRS generation;
Fig. 13 is a signal flow diagram illustrating an example of the flow of sidelink scheduling and transmission according to an embodiment;
Fig. 14 is a block diagram illustrating example data splitting options for relay link coordination;
Fig. 15 is a signal flow diagram illustrating examples for configuring a relay link and a discovery procedure;
Fig. 16 is a signal flow diagram illustrating examples for configuring a further relay link and relay link transmissions;
Figs. 17A and 17B are block diagrams illustrating example devices that may implement the methods and teachings according to this disclosure;
Fig. 18 is a block diagram illustrating an example of a telecommunications network according to one embodiment;
Fig. 19 is a block diagram illustrating an example of a network serving two UEs.

### DETAILED DESCRIPTION

As noted above, supporting multiple relay links with coordination or cooperation between those links may be viable for such purposes as improving system performance in latency or throughput for emerging and important applications. Examples of new use cases include video monitoring and feedback for industrial manufacturing or for use by public authorities such as firefighters or police in providing enhanced public safety. These use cases, or others, may require higher data throughput, at a level of tens of Megabits per second (Mbps) for example, and low latency, on the order of milliseconds (ms) for example, that cannot be satisfied by current UE relay link designs. Relay link cooperation as disclosed herein, in which multiple relay links coordinate or cooperate together, may provide a feasible solution and satisfy both higher throughput and lower latency needs.

The present disclosure addresses several issues, including multiple relay link configuration for in-coverage and out-of-coverage remote UEs, relay link setup procedures, adaption between single relay link and multiple relay link cooperation, and various aspects of relay link cooperation such as scheduling, scrambling, transmission, data splitting, data aggregation, and general relay link cooperation data flow.

Multiple relay link coordination in accordance with some embodiments as disclosed herein involve configuration of one relay link, also referred to herein as a primary relay link or a major relay link (MRL) or a first relay link, and at least one other relay link, also referred to herein as a secondary relay link (SRL) or a second relay link. The relay links have different roles in some embodiments, and the MRL and SRL naming is used herein for ease of reference to relay links that have different roles. For example, in some embodiments the MRL carries more information than the SRL, such as control and feedback, while both the MRL and the SRL carry data. The roles of MRL and SRL may be switched or updated between any of the multiple relay links under any of various conditions. Features disclosed herein in the context of an MRL or SRL may be generalized to first and second relay links, which may or may not be called a primary or major relay link or a secondary relay link. The same applies to components of such relay links, including primary, main, major, or secondary relay UEs for example.

There are different ways to set up multiple relay links and configure cooperation among them. For example, a first relay link or MRL through one or more relay UEs, also referred to herein as main relay UE(s) (MRU(s)) may be established first, and then used to add one or more second relay links or SRLs by signaling from an MRU to cause one or more UEs, which may include either or both of remote UEs and other relay UEs, to transmit discovery signals and feed back measurements. In another embodiment, one or more UEs transmit discovery signals and have other UEs perform and report measurements. One or more of a remote UE, an MRU, and a gNB may negotiate with either or both of other remote UEs and other relay UEs to set up an SRL. Configuration of an SRL involves a gNB in some embodiments, although other embodiments for configuration are also possible.

Different options for switching between single relay link transmission and multiple relay link cooperation are described, including semi-static configuration and dynamic signaling. This type of switching may be useful, for example, in providing flexibility to accommodate different needs between robustness and performance.

These and other features are described in further detail herein.

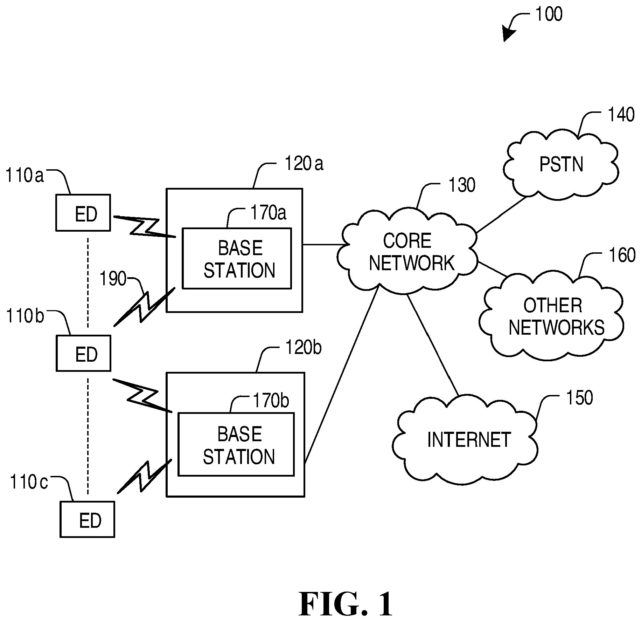

With reference first to Fig. 1, an example communication system 100 in which aspects of the present disclosure are implemented in some embodiments is shown. In general, the system 100 enables multiple wireless or wired elements to communicate data and/or other content. The purpose of the system 100 may be to provide content (e.g., any one or more of voice, data, video, text, referred to collectively herein as "data") via broadcast, unicast, multicast, user device to user device, etc. The system 100 may operate efficiently by sharing communication resources such as bandwidth.

In this example, the communication system 100 includes electronic devices (ED) 110a-110c, Radio Access Networks (RANs) 120a-120b, a core network 130, a Public Switched Telephone Network (PSTN) 140, the Internet 150, and other networks 160. While certain numbers of these components or elements are shown in Fig. 1, any reasonable number of these components or elements may be included in the system 100.

The EDs 110a-110c are configured to operate, communicate, or both, in the system 100. For example, the EDs 110a-110c are configured to transmit, receive, or both via wireless communication channels. Each ED 110a-110c represents any suitable end user device for wireless operation and may include such devices as, or may be referred to as, a UE, Wireless Transmit/Receive Unit (WTRU), mobile station, mobile subscriber unit, cellular telephone, station (STA), Machine Type Communication device (MTC), Personal Digital Assistant (PDA), smartphone, laptop, computer, touchpad, wireless sensor, or consumer electronics device.

In Fig. 1, the RANs 120a-120b include base stations 170a-170b, respectively. Each base station 170a-170b is configured to wirelessly interface with one or more of the EDs 110a-110c to enable access to any other base station 170a-170b, the core network 130, the PSTN 140, the Internet 150, and/or the other networks 160. For example, the base stations 170a-170b may be or include one or more of several well-known devices, such as a Base Transceiver Station (BTS), a Node-B (NodeB), an evolved NodeB (eNodeB), a Home eNodeB, a gNB (next generation NodeB), a Transmission Point (TP), a Transmission Reception Point (TRP), a site controller, an Access Point (AP), or a wireless router. Any ED 110a-110c may be alternatively or jointly configured to interface, access, or communicate with any other base station 170a-170b, the internet 150, the core network 130, the PSTN 140, the other networks 160, or any combination of the preceding. Optionally, the system may include RANs, such as RAN 120b, wherein the corresponding base station 170b accesses the core network 130 via the internet 150, as shown.

The EDs 110a-110c and base stations 170a-170b are examples of communication equipment that can be configured to implement some or all of the functionality or embodiments described herein. In the embodiment shown in Fig. 1, the base station 170a forms part of the RAN 120a, which may include other base stations, Base Station Controller(s) (BSC), Radio Network Controller(s) (RNC), relay nodes, elements, and/or devices. Any base station 170a, 170b may be a single element, as shown, or multiple elements, distributed in the corresponding RAN, or otherwise. Also, the base station 170b forms part of the RAN 120b, which may include other base stations, elements, and/or devices. Each base station 170a-170b may be configured to operate to transmit and/or receive wireless signals within a particular geographic region or area, sometimes referred to as a coverage area. A cell may be further divided into cell sectors, and a base station 170a-170b may, for example, employ multiple transceivers to provide service to multiple sectors. In some embodiments a base station 170a-170b may be implemented as pico or femto nodes where the radio access technology supports such. In some embodiments, MIMO technology may be employed having multiple transceivers for each coverage area. The number of RANs 120a-120b shown is exemplary only. Any number of RANs may be contemplated when devising the system 100.

The base stations 170a-170b communicate with one or more of the EDs 110a-110c over one or more air interfaces 190 using wireless communication links e.g. RF, µWave, IR, etc.. The air interfaces 190 may utilize any suitable radio access technology. For example, the system 100 may implement one or more channel access methods, such as Code Division Multiple Access (CDMA), Time Division Multiple Access (TDMA), Frequency Division Multiple Access (FDMA), Orthogonal FDMA (OFDMA), or Single-Carrier FDMA (SC-FDMA) in the air interfaces 190.

A base station 170a-170b may implement Universal Mobile Telecommunication System (UMTS) Terrestrial Radio Access (UTRA) to establish an air interface 190 using Wideband CDMA (WCDMA). In doing so, the base station 170a-170b may implement protocols such as HSPA, HSPA+ optionally including HSDPA, HSUPA or both. Alternatively, a base station 170a-170b may establish an air interface 190 with Evolved UTMS Terrestrial Radio Access (E-UTRA) using LTE, LTE-A, and/or LTE-B. It is contemplated that the system 100 may use multiple channel access functionality, including such schemes as described above. Other radio technologies for implementing air interfaces include IEEE 802.11, 802.15, 802.16, CDMA2000, CDMA2000 1X, CDMA2000 EV-DO, IS-2000, IS-95, IS-856, GSM, EDGE, and GERAN. Of course, other multiple access schemes and wireless protocols may be utilized.

The RANs 120a-120b are in communication with the core network 130 to provide the EDs 110a-110c with various services such as voice, data, and other services. Understandably, the RANs 120a-120b and/or the core network 130 may be in direct or indirect communication with one or more other RANs (not shown), which may or may not be directly served by core network 130, and may or may not employ the same radio access technology as RAN 120a, RAN 120b or both. The core network 130 may also serve as a gateway access between (i) the RANs 120a-120b or EDs 110a-110c or both, and (ii) other networks (such as the PSTN 140, the Internet 150, and the other networks 160). In addition, some or all of the EDs 110a-110c may include functionality for communicating with different wireless networks over different wireless links using different wireless technologies and/or protocols. PSTN 140 may include circuit switched telephone networks for providing Plain Old Telephone Service (POTS). Internet 150 may include a network of computers and subnets (intranets) or both, and incorporate protocols, such as IP, TCP, UDP. EDs 110a-110c may be multimode devices capable of operation according to multiple radio access technologies, and incorporate multiple transceivers necessary to support such technologies.

It is contemplated that the communication system 100 as illustrated in Fig. 1 may support an NR cell, which also may be referred to as a hyper cell. Each NR cell includes one or more base stations. The base stations of the NR cell may use the same NR cell ID. The NR cell ID is a logical assignment to all physical base stations of the NR cell and may be carried in a broadcast synchronization signal. The NR cell may be dynamically configured. The boundary of the NR cell may be flexible and the system dynamically adds or removes base stations to from the NR cell.

In one embodiment, an NR cell may have one or more base stations within the NR cell transmitting a UE-specific data channel, which serves a UE. The one or more base stations associated with the UE specific data channel are also UE specific and are transparent to the UE. Multiple parallel data channels within a single NR cell may be supported, with each data channel serving a different UE for example.

Direct communications between UEs such as the EDs 110a-110c in Fig. 1 are also possible, and are represented by dashed lines in Fig. 1. UEs communicate with each other over sidelinks to enable UE cooperation and coordinated multiple relay links in some embodiments, as described in further detail at least below.

One relay link technique that could be used to improve wireless communication network coverage, such as at cell edge or indoors, involves relaying the data of a remote UE through a relay UE. In an uplink operation where data is originated at the remote UE and destined for a network device, the remote UE may be known as a source UE (SUE). Another uplink technique is to improve system throughput by sharing data of an SUE to a Cooperative UE (CUE) on a sidelink between the SUE and the CUE, and then conducting joint transmission in uplink through both the Uu link and the sidelink. An SUE could be helped by each of these techniques for different scenarios. For example, if an SUE is in a coverage hole and does not have large amount of data to transmit, it could be helped by a relay UE. In another situation, if an SUE has a large amount of data to transmit and it is able to find a nearby CUE, then the SUE could share some data with the CUE on sidelink and both CUE and SUE could conduct joint uplink transmission. Therefore, it may be beneficial to support both types of uplink UE cooperation, and to support adaptation between the two types. A CUE could be configured into different uplink cooperative modes, including a relay mode and a joint transmit mode. Moreover, these two techniques could also be used together to achieve certain goals.

The present disclosure concentrates primarily on multiple relay link applications in which remote UEs are in some way assisted by relay UEs. Though reference is made primarily to "relay UEs" herein, relay UEs may also be referred to as CUEs both here and elsewhere. Relay links refer to links that involve at least one intermediate component, including at least one relay UE. The relay links enable communications between a communication network and a remote UE, which may or may not be within network coverage.

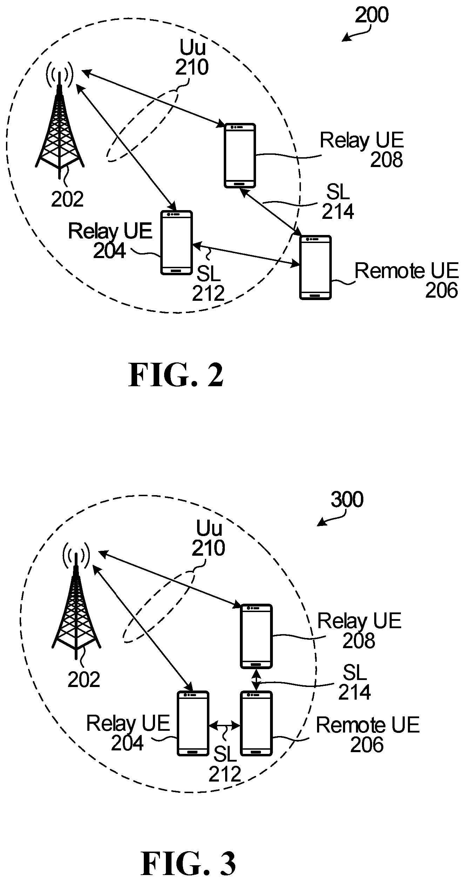

Fig. 2 is a block diagram of another example communication system illustrating multiple relay links. The example system 200 includes network equipment 202 and UEs including relay UEs 204, 208 and a remote UE 206. Communications between the UEs 204, 208 and the network equipment 202 are through an interface shown as "Uu" 210 in Fig. 2, and sidelink communications directly between each of the relay UEs 204, 208 and the remote UE 206 are through sidelinks 212, 214. Examples of these components and implementation options for communications between these components are provided elsewhere herein. Network equipment 202 may be a network device or equipment such as a base station 170a, 170b in Fig. 1. The UEs may be EDs 110a-c in Fig. 1, for example.

Fig. 2 represents one scenario in which relay UE coordination or cooperation may be useful. In this scenario, the remote UE 206 is "out-of-coverage" (outside of a geographical area of direct communication with network equipment), and the relay UEs 204, 208 are in coverage of the network equipment. There are two relay links, each including a Uu segment between the network equipment 202 and a relay UE 204, 208, and a sidelink segment between each relay UE 204, 208 and the remote UE 206.

Fig. 3 is a block diagram of another example communication system, illustrating another multiple relay link scenario. In the example 300, the difference from the example 200 is that the remote UE 206 is in-coverage in Fig. 3. However, there are still two relay links in the example 300, each including a Uu segment between the network equipment 202 and a relay UE 204, 208, and a sidelink segment between each relay UE 204, 208 and the remote UE 206.

Regardless of whether the remote UE 206 is out-of-coverage as in Fig. 2 or in-coverage as in Fig. 3, downlink (DL) transmission may involve the network equipment 202, illustratively a gNB, transmitting data to the multiple relay UEs 204, 208 on a Uu link 210, and the relay UEs cooperatively relaying the data from the gNB to the remote UE 206 on the sidelinks 212, 214. For uplink (UL) transmission, the remote UE 206 transmits data to the multiple relay UEs 204, 208 on the sidelinks 212, 214. Each relay UE 204, 208 then cooperatively relays the data from the remote UE 206 to the gNB 202 on a Uu link 210.

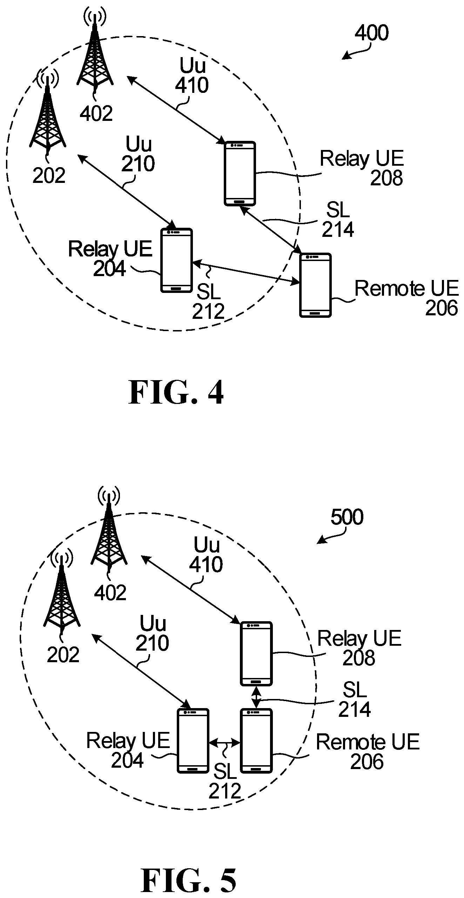

Relay links need not necessarily involve the same network equipment 202 as shown in Figs. 2 and 3. Figs. 4 and 5 are block diagrams of further example communication systems illustrating additional multiple relay link scenarios, in which each relay UE 204, 208 communicates with different network equipment 202, 402, which may be different TRPs for example, over Uu links 210, 410. Figs. 4 and 5 are otherwise similar to Figs. 2 and 3, respectively. In the examples 400, 500, there are two relay links, and each relay link includes a Uu segment 210, 410 between network equipment 202, 402 and a relay UE 204, 208, and a sidelink segment between each relay UE 204, 208 and the remote UE 206. Downlink transmission may involve the network equipment 202, 402, illustratively different TRPs, transmitting data to the multiple relay UEs 204, 208 on the Uu links 210, 410 and the relay UEs cooperatively relaying the data to the remote UE 206 on the sidelinks 212, 214. Uplink transmission may involve the remote UE 206 transmitting data to the multiple relay UEs 204, 208 on the sidelinks 212, 214, and the relay UEs cooperatively relaying the data to the TRPs 202, 402 on the Uu links 210, 410.

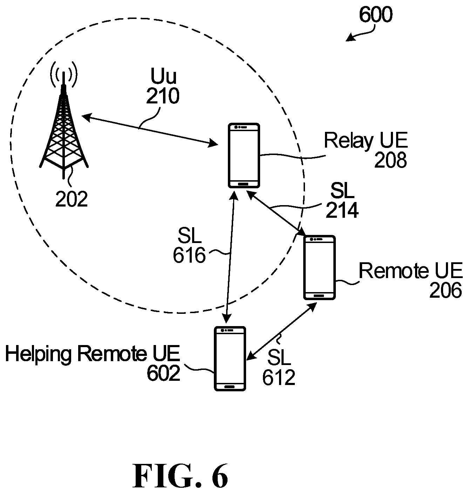

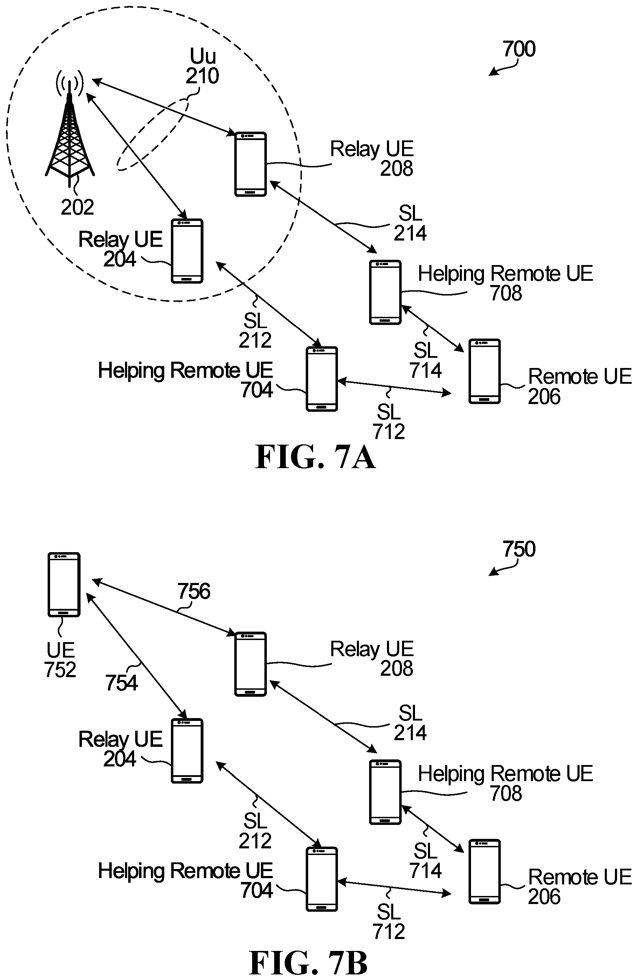

Figs. 6 and 7A are block diagrams of further example communication systems illustrating additional multiple relay link scenarios that involve yet another UE for assisting a remote UE in a multiple relay link communication. These assisting UEs may be based on another remote UE or another relay UE; therefore, they may be referred to as "helping" remote UEs, helping relay UEs, secondary relay UEs, or some other variation.

The example 600 includes multiple out-of-coverage remote UEs 206, 602, and an in-coverage relay UE 208. Two relay links are provided for the remote UE 206 in this example: over the sidelink 214 and over the sidelinks 612, 616 through the "helping" remote UE 602. For downlink transmission, in an embodiment the network equipment 202, illustratively a gNB, transmits data to the in-coverage relay UE 208 on the Uu link 210, the relay UE broadcasts or otherwise relays the data from the gNB to the out-of-coverage remote UEs 206, 602 on the sidelinks 214, 616, and the out-of-coverage helping remote UE 602 relays the data on the sidelink 612 to the out-of-coverage destination remote UE 206. In an embodiment of uplink transmission, the out-of-coverage remote UE 206 transmits data to the helping out-of-coverage remote UE 602 on the sidelink 612, the out-of-coverage remote UE 206 and the out-of-coverage helping remote UE 602 cooperatively transmit the data to the in-coverage relay UE 208, and the in-coverage relay UE relays the data to the gNB 202.

In Fig. 7A, a similar example 700 is shown, but includes two in-coverage relay UEs 204, 208, multiple out-of-coverage helping remote UEs 704, 708, and a further remote UE 206. Two relay links are provided for the remote UE 206 in this example, over the sidelinks 212, 712 through the helping remote UE 704 and over the sidelinks 214, 714 through the helping remote UE 708. Again, as in other examples, multiple relay links are formed where one end is a base station, gNB, TRP or other network equipment 202 and the other end is a remote UE 206, which may be considered a destination UE in the context of downlink transmission or a source UE in the context of uplink transmission.

For downlink transmission in the example 700, in an embodiment a gNB 202 sends data to each of the in-coverage relay UEs 204, 208 on a Uu link 210, and the relay UEs relay the data from the gNB to the next helping remote UE 704, 708 on each relay link, over the sidelinks 212, 214. In another embodiment, there are multiple relay UEs in a relay link, and each relay UE relays data to a next relay UE over a sidelink. The last relay UE or helping remote UE 704, 708 relays the data on the sidelinks 712, 714 to the out-of-coverage destination remote UE 206. For uplink transmission, in an embodiment the out-of-coverage source remote UE 206 transmits data to nearby helping remote UEs 704, 708 on the sidelinks 712, 714 of each relay link. The helping remote UEs 704, 708 relay the data to the next helping remote UE, or to a relay UE 204, 208 in the example shown, on each relay link over the sidelinks 212, 214. The last in-coverage relay UE 204, 208 relays the data to the gNB 202 on each relay link over a Uu link 210.

Fig. 7B is a block diagram of another example communication system illustrating multi-hop UE-to-UE relay links. The example 750 is similar to the example 700 in Fig. 7A, but includes a source UE 752 that has sidelinks 754, 756 with the two relay UEs 204, 208, instead of a gNB and Uu links. Two multi-hop UE-to-UE relay links are provided for the remote UE 206 in this example, over the sidelinks 754, 212, 712 through the relay UE 204 and the helping remote UE 704, and over the sidelinks 756, 214, 714 through the relay UE 208 and the helping remote UE 708.

In the example 750, the multiple relay links are formed between two UEs 752, 206. If the UE 752 has data to send to the remote UE 206, then the UE 752 may be considered a source UE and the remote UE 206 may be considered a destination UE. For this direction of transmission, in an embodiment the source UE 752 sends data to each of the relay UEs 204, 208 on a sidelink 754, 756, and the relay UEs relay the data from the source UE 752 to the next helping remote UE 704, 708 on each relay link, over the sidelinks 212, 214. In another embodiment, there are multiple relay UEs in a relay link, and each relay UE relays data to a next relay UE over a sidelink. The last relay UE or helping remote UE 704, 708 relays the data on the sidelinks 712, 714 to the destination UE 206. For transmission in the opposite direction, in an embodiment the remote UE 206 transmits data to nearby helping remote UEs 704, 708 on the sidelinks 712, 714 of each relay link. The helping remote UEs 704, 708 relay the data to the next helping remote UE, or to a relay UE 204, 208 in the example shown, on each relay link over the sidelinks 212, 214. The last relay UE 204, 208 relays the data to the UE 752 on each relay link over an sidelink 754, 756.

Figs. 2 to 7B are intended solely as examples. Other embodiments that involve one or more relay UEs and in-coverage or out-of-coverage remote UEs are possible. The present disclosure, and coordination or cooperation between multiple relay links, are not limited only to these examples, or to the particular examples that are used to describe embodiments in further detail below.

In some embodiments, a base station, gNB, or other network equipment configures multiple UE relay links for a remote UE. Consider the example 200 in Fig. 2. A gNB 202 could configure a first one of the UE relay links as an MRL and configure another, second UE relay link as an SRL. The configuration may include an index for each relay link, such as relay link #1 for the first relay link or MRL, relay link #2 for an SRL or second relay link, and so on for any further relay links or SRLs for the same remote UE 206. The configuration may also or instead include one or more indices, such as a UE Radio Network Temporary Identifier (RNTI), for any of a relay UE, a helping remote UE, and a remote UE involved in each relay link. A relay link may include multiple UE relays. A relay link may also or instead include multiple helping remote UEs.

As noted above, relay links such as an MRL and any SRLs may have different roles. For example, an MRL could carry more information such as control and feedback, while both an MRL and each SRL could carry data. The MRL and SRL roles, or more generally roles of different relay links, may be switched or updated between any of the multiple relay links in some embodiments.

A relay link may be activated or enabled, for example, as part of configuration or by actually transmitting data on the relay link after its configuration. Data may be transmitted on a relay link as scheduled or initiated by a gNB, as scheduled or initiated by the remote UE of the MRL, as scheduled or initiated by an MRU, or as scheduled or initiated by a helping remote UE in the MRL, for example. In some embodiments, a relay link can be disabled by configuration or signaling by one or more of the gNB, an MRU, a helping remote UE in the MRL, and the remote UE.

Every embodiment need not necessarily use scheduling, but in some embodiments a scheduler is used to determine a scheduling strategy among relay links. For example, for diversity or reliability, a best relay link or multiple relay links may be scheduled or otherwise selected to transmit the same data. For higher aggregated data rate multiple relay links may be scheduled or otherwise selected to transmit different data. Link scheduling or selection may be based on any of various factors or conditions, such as any one or more of: Quality of Service (QoS) provided by a link, QoS required by a data application, UE Buffer Status Report (BSR) for uplink transmission from the remote UE, and Channel State Information (CSI) for the link.

Potential benefits of configuring multiple relay links include improved multiple relay link UE diversity, in that the same data could be transmitted on multiple relay links instead of only over one link, thus providing multi-relay link gain. Improved aggregated throughput and coverage are also potential benefits, in that data can be split and transmitted on multiple relay links to the remote UE in downlink or to the gNB or other network equipment in uplink, and aggregated or combined at the downlink or uplink destination.

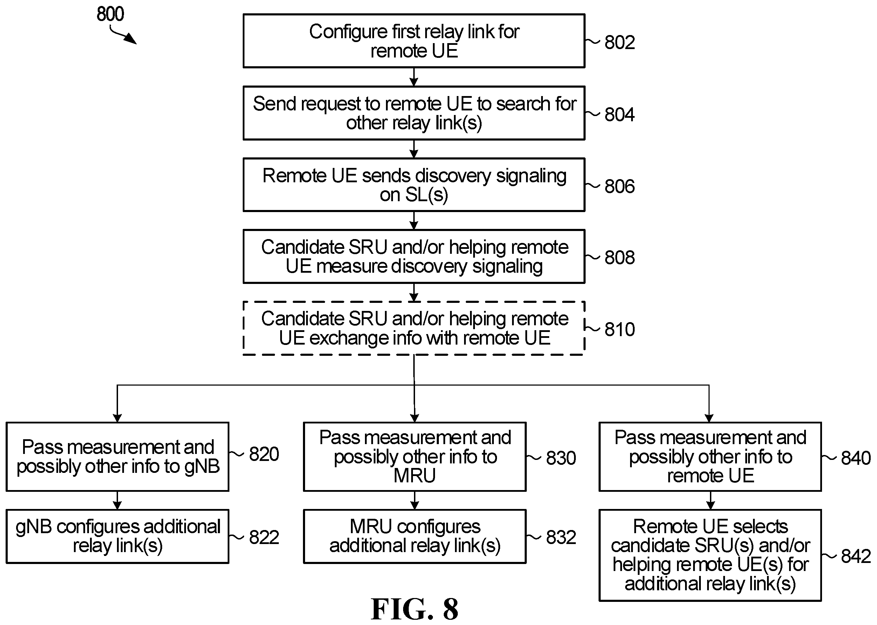

For the purpose of an illustrative example of relay link cooperation setup and configuration, consider the example communication system 700 in Fig. 7A, and the flow chart in Fig. 8, which illustrates a method according to an embodiment. The example method 800 involves, at 802, configuring and enabling a first relay link as the MRL. A gNB 202 may handle configuring and enabling the MRL, for example, and this may involve the gNB configuring one of the relay UEs, such as the relay UE 208, as an MRU. In a multi-relay link scenario, configuring and enabling one or more SRLs may be coordinated with the MRL.

With the MRL having been configured at 802, the gNB 202 or the MRU 208 may configure the SRL(s) for relay link cooperation. In an embodiment, at 804 the gNB 202 or the MRU 208 signals the remote UE 206 via the MRL, through sidelinks 214, 714 and the helping remote UE 708 in Fig. 7A, to transmit sidelink discovery signaling, on the sidelink 712 in the example shown. The signaling to cause the remote UE 206 to transmit discovery signaling is also referred to herein as a discovery request or discovery request signaling, and may more generally be considered a request to search for other relay links as shown in Fig. 8. The remote UE 206 transmits the discovery signaling at 806, by broadcast or at least over all known sidelinks, for example. Herein, the discovery signaling could be or include dedicated signals that are used only for the purpose of discovery or generic reference signaling such as Channel State Information-Reference Signal (CSI-RS) or Demodulation Reference Signal (DMRS) for channel measurement or demodulation purposes. In either case, such signals can be used by one or more of another remote UE and a relay UE to measure the channel quality on sidelink and feed back measurement reports. The discovery request could include the configuration of discovery signal transmission such as periodicity or offset of discovery signal transmission or triggering for transmission of aperiodic discovery signaling.

A component that receives discovery signaling, such as the helping remote UE 704 in the example system 700, performs one or more measurements at 808 based on the received discovery signaling, and may exchange information with the remote UE 206 on the sidelink 712, as shown in 810. A receiving component may, for example, transmit information indicative of any one or more of: a capability such as relay capability of the component, availability of the component for supporting a relay link for the remote UE 206, and whether the component is currently in-coverage or out-of-coverage. In some embodiments, such information could have been previously exchanged and be stored at the gNB or MRU for determination of an SRL.

In one embodiment, the receiving component, which in this example is the helping remote UE 704, passes or reports its measurement(s), and possibly other information, to the gNB 202 as shown at 820, and at 822 the gNB configures or enables an additional relay link as an SRL through the relay UE 204, which can be called a secondary relay UE (SRU). The gNB 202 may configure an SRL based on any of a number of factors, such as any one or more of: channel quality of its Uu link with the first relay UE in a candidate SRL such as the relay UE 204; channel quality of a sidelink such as one or both of the sidelink 212 and the sidelink 712 on a candidate SRL; overall channel quality of multiple segments of a relay link or a complete link including a Uu link and at least one sidelink; load of one or more UEs, including either or both of relay UEs or helping UEs on a relay link; capability of one or more UEs, including either or both of relay UEs and helping UEs on a relay link; and availability of one or more UEs, including either or both of relay UEs and helping UEs on a relay link.

Another option involves the receiving component passing or reporting the measurement and possibly other information to the MRU as shown at 830, and the MRU configures or enables the SRL at 832. The MRU may apply any of various criteria in selecting between multiple SRLs or determining whether an SRL should be established, including the examples provided above for a gNB.

According to another embodiment, the receiving component reports to the remote UE 206 at 840, and the remote UE configures or enables the SRL at 842. In the example 700, the remote UE 206 selects and configures the helping remote UE 704 and the relay UE 204 for the SRL. Again, the example criteria provided above for a gNB, or others, may also or instead be applied by the remote UE 206 in determining whether an SRL should be established and/or in selecting between candidate SRLs.

The method 800 represents one possible embodiment. Other embodiments may include additional, fewer, or different operations, performed in a similar or different order. For example, some embodiments might not include a discovery procedure that involves discovery request signaling, discovery signaling, measurement, and reporting. A remote UE may already have one or more other configured sidelinks, for example, in which case identifying sidelinks, helping remote UEs, and/or SRUs does not necessarily involve a discovery procedure.

Either or both of measurement reporting and information exchange may be subject to any of various conditions. For example, there might be no measurement reporting or information exchange if a discovery signaling-based power measurement is below a threshold, to thereby avoid further SRL-related signaling and processing in the case of a sidelink that is not strong enough to support an SRL. Other conditions, such as relay capability, availability, or coverage status (in-coverage or out-of-coverage) may also or instead be applied to measurement reporting or information exchange.

Fig. 8 also includes operations that may be performed at multiple different components in some embodiments. A particular component may perform some, but not necessarily all, of the illustrated operations.

Also, although the description of Fig. 8 above refers to Fig. 7A and establishing only one SRL as an example, the method 800 may also or instead be applied to different scenarios. In the example system 200 in Fig. 2 or the example system 300 in Fig. 3, for example, a relay UE 204, 208 may receive discovery signaling from the remote UE 206. Discovery signaling may be received by either or both of candidate SRUs and helping remote UEs. It is possible that different types of relay links may exist in the same system. Some relay links may include helping remote UEs whereas others do not. Different relay links may also or instead have different numbers of hops through one or more relay UEs and/or one or more helping remote UEs.

Other variations are also possible, including embodiments for multiple relay links between UEs as shown by way of example in Fig. 7B.

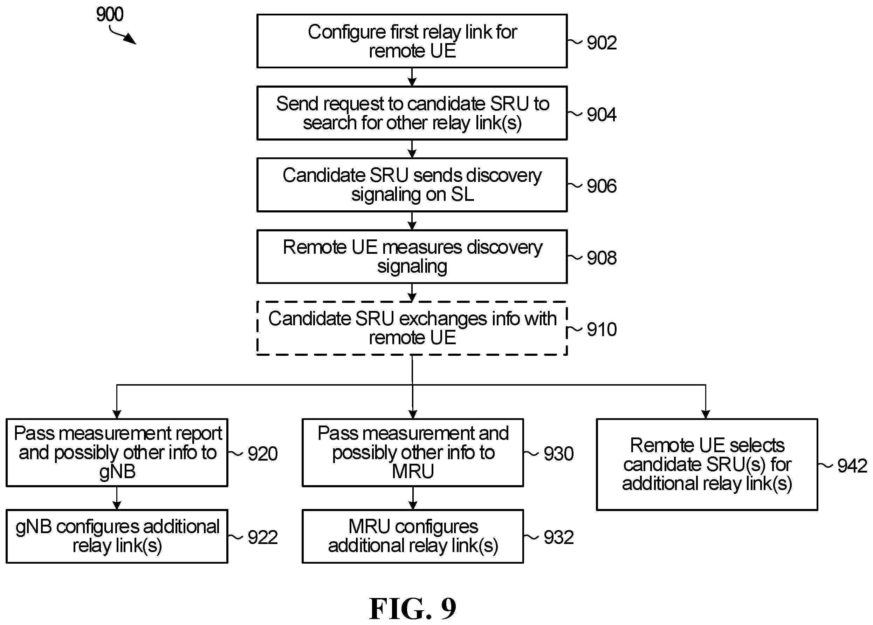

Fig. 9 is a flow chart illustrating a method according to another embodiment. In the example method 800 in Fig. 8, discovery signaling is transmitted by the remote UE for which multiple relay links are being set up. The example method 900 in Fig. 9 relates to an embodiment in which a candidate SRU transmits discovery signaling, and is described below with reference to the example system 200 in Fig. 2.

At 902, a first relay link is configured and enabled as the MRL, by a gNB 202, for example. The gNB 202 may configure one of the relay UEs, such as the relay UE 208, as an MRU. One or both of the gNB 202 and the MRU 208 may signal the other relay UE 204 at 904 to transmit sidelink discovery signaling, or in more general terms send a request to one or more relay UEs to search for other relay links as shown in Fig. 9. The relay UE 204 transmits the discovery signaling at 906, at least on the sidelink 212, and may broadcast discovery signaling or transmit discovery signaling at least over all known sidelinks.

For the example system 200 in Fig. 2 and the purpose of an SRL for the remote UE 206, it is receipt of discovery signaling by the remote UE 206 that is of interest. The remote UE 206, presuming that the discovery signaling transmitted by the relay UE 204 at 906 is detected, performs one or more measurements at 908 based on the received discovery signaling. The relay UE 204, which is a candidate SRU in this example, may exchange other information with the remote UE 206 at 910 on the sidelink 212. Examples of such information include information indicative of any one or more of: a capability such as relay capability of the relay UE 204, availability of the relay UE 204 for supporting a relay link for the remote UE 206, and whether the relay UE 204 is currently in-coverage or out-of-coverage. In some embodiments, such information could be stored at the gNB or MRU for determination of an SRL.

The remote UE 206 may pass or report its measurement(s), and possibly other information, to the gNB 202 through the MRL. This is shown at 920. The gNB 202 configures an additional relay link as an SRL through the relay UE 204, at 922. The gNB 202 may configure an SRL based on any of a number of factors, such as any one or more of: channel quality of its Uu link with the first relay UE such as the relay UE 204 on a candidate SRL; channel quality of a sidelink such as the sidelink 212 on a candidate SRL; overall channel quality of multiple segments of a relay link or a complete link including a Uu link and at least one sidelink; load of one or more UEs, which may include any or all of relay UEs and helping UEs on a relay link; and capability of one or more UEs, which may include any or all of relay UEs and helping UEs on a relay link.

Measurement(s) and possibly other information may be passed or reported to the MRU 208 as shown at 930, through the sidelink 214, and the MRU configures the SRL at 932. The MRU may apply any of various criteria in selecting between multiple SRLs and/or determining whether an SRL should be established, including the examples provided above for a gNB.

At 942, Fig. 9 illustrates that the remote UE 206 itself may configure the SRL, by selecting and configuring the relay UE 204 as the SRU for the SRL. The example criteria provided above for a gNB, or others, may also or instead be applied by the remote UE 206 at 942. Although not explicitly shown in Fig. 9, the remote UE 206 may also advise one or both of the MRU 208 and the gNB of configuration of the SRL.

The method 900, like the method 800 in Fig. 8, represents one embodiment, and other embodiments may include additional, fewer, or different operations, performed in a similar or different order. At least the variations noted above for Fig. 8 may also apply to Fig. 9. For example, other embodiments might or might not include a discovery procedure, either or both of measurement reporting and information exchange may be subject to one or more conditions or criteria, a particular component may perform some but not necessarily all of the illustrated operations, the method 900 may also or instead be applied to scenarios that are different from the specific example discussed with reference to Fig. 2, and different types of relay links may exist in the same system. Other variations may be or become apparent.

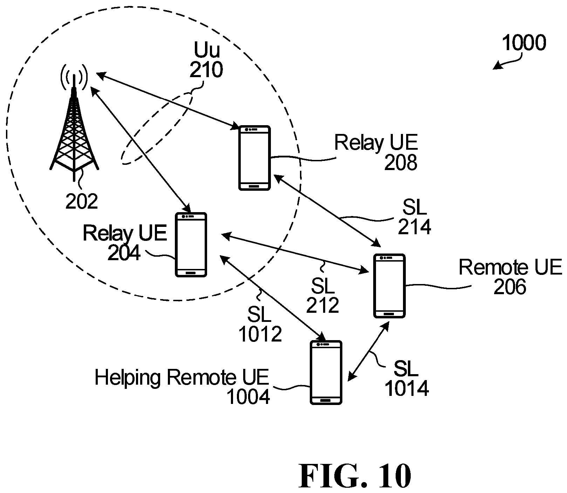

The embodiments shown in Figs. 8 and 9 are not mutually exclusive, or exhaustive. Consider Fig. 10 as an example. Fig. 10 is a block diagram of another example communication system 1000, illustrating a multiple relay link scenario similar to Fig. 2 but with addition of a helping remote UE 1004, with sidelinks 1012, 1014. Suppose that an MRL for the remote UE 206 has been configured through the relay UE 208, which is the MRU in this example. Either or both of a gNB 202 and the MRU 208 may configure an SRL through the relay UE 204, which is the SRU in this example.

In an embodiment, a discovery request may be sent from the gNB 202, the MRU 208, or even the remote UE 206, to the candidate SRU 204. A discovery request may also or instead be sent to the remote UE 206 by the gNB 202 or the MRU 208. Thus, either or both of the candidate SRU 204 and the remote UE 206 may transmit discovery signaling. The discovery signaling from the candidate SRU 204 may be received by the helping remote UE 1004 and/or by the remote UE 206, and similarly the discovery signaling from the remote UE 206 may be received by the helping remote UE 1004 and/or by the candidate SRU 204. A component that receives discovery signaling may exchange measurements and possibly other information with the component from which the discovery signaling was received, and/or possibly even with one or more other components. For example, a UE such as the relay UE 204 or the helping remote UE 1004 may be able to communicate with the MRU 208 through further sidelinks, which have not been shown in Fig. 10 in order to avoid further congestion in the drawing, and exchange measurement(s) and/or other information with the MRU.

Either or both of measurement(s) and other information may be collected by one or more of the gNB 202, the MRU 208, and the remote UE 206 to determine whether an SRL should be configured, or to select between multiple SRLs, for example. SRL establishment and/or selection decisions may be made by any of these components, and any of these components may potentially send configuration signaling to the candidate SRU 204, and the helping remote UE 1004 if that UE is to be involved in the SRL, to configure the SRL.

The examples provided in Figs. 8 and 9 may also or instead be extended to other embodiments, such as in UE-to-UE relay link embodiments as shown by way of example in Fig. 7B. Features that are described with reference to a gNB or network device in Figs. 8 and 9 may be applied to a UE such as a source UE 752 in an example described above with reference to Fig. 7B. The relay link through the relay UE 208 and the helping remote UE 708 may be considered a first relay link for the remote UE 206, in which case the relay UE 208 may be considered the MRU. Either or both of the source UE 752 and the MRU 208 may configure a second relay link the relay UE 204, which may be considered the SRU in this example.

In an embodiment, a discovery request may be sent from the source UE 752 or the MRU 208, or even the helping remote UE 708 or the remote UE 206, to the candidate SRU 204. A discovery request may also or instead be sent to the remote UE 206 by the source UE 752, the MRU 208, or the helping remote UE 708. Thus, either or both of the candidate SRU 204 and the remote UE 206 may transmit discovery signaling. In some embodiments a helping remote UE such as the helping remote UE 708 may also or instead receive a discovery request and transmit discovery signaling.

In Fig. 7B, with the sidelinks as shown, the discovery signaling from the candidate SRU 204 may be received by the helping remote UE 704, and similarly the discovery signaling from the remote UE 206 may be received by the helping remote UE 704. A component that receives discovery signaling may exchange measurements and possibly other information with the component from which the discovery signaling was received, and/or possibly even with one or more other components. For example, a UE such as the relay UE 204 or the helping remote UE 704 may be able to communicate with the MRU 208 through further sidelinks, which have not been shown in Fig. 7B in order to avoid further congestion in the drawing, and exchange measurement(s) and/or other information with the MRU.

Either or both of measurement(s) and other information may be collected by one or more of the source UE 752, the MRU 208, the helping remote UE 708, and the remote UE 206 to determine whether an SRL should be configured, or to select between multiple SRLs, for example. SRL establishment and/or selection decisions may be made by any of these components, and any of these components may potentially send configuration signaling to the candidate SRU 204, and the helping remote UE 704 if that UE is to be involved in the SRL, to configure the SRL.

Figs. 8 to 10, and the example with reference to Fig. 7B, are intended to illustrate some of the many options for coordination or cooperation among multiple relay links. Others are also possible. In general, any of various components may be involved in a discovery procedure or other process to identify candidate SRLs or SRUs; any of various components may be involved in determining whether an SRL should be configured or selecting one or more SRLs and SRUs from multiple candidate SRLs or SRUs; and any of various components may be involved in configuring SRLs. It should therefore be appreciated that there are many different options for setting up multiple relay links, for such features as relay cooperation or switching between multiple relay link cooperation and single relay link transmission.

Multiple relay links may provide for more flexibility to accommodate different needs. For example, some embodiments may involve switching between a single link and multiple links with relay cooperation.

One possible option involves semi-statically switching by control signaling such as Radio Resource Control (RRC) signaling, to indicate whether current configuration is for multiple links (relay cooperation) or a single relay link.

Another option involves dynamic switching, using Downlink Control Information (DCI) for example. In one embodiment, separate DCI is used for each relay UE, each relay UE decodes its own Physical Downlink Control Channel (PDCCH), and if a relay UE does not detect and decode its PDCCH then it may not receive and relay data to a remote UE or a gNB.

According to another DCI embodiment, a single DCI is used for all relay UEs. For explicit indication, the DCI could carry an indication as to which relay UE shall handle the relay transmission. For example, a 1-bit field could indicate whether the MRL or the SRL shall be used for relaying the data. An implicit indication may use some other type of indication to implicitly indicate whether current configuration is for single relay UE transmission or relay UE cooperation. For example, if DCI indicates two-CW (codeword) transmission, then the first CW transmission may be carried by an MRL and the second CW transmission may be carried by an SRL. As another example, if DCI indicates single-CW transmission, the CW is carried only by the MRL, and no SRL is used.

These are illustrative examples of options for switching between single relay transmission and multiple relay link cooperation, to provide flexibility to accommodate different needs for example.

Some aspects of the present disclosure relate to scheduling, transmission, data splitting, data aggregation, and data flow.

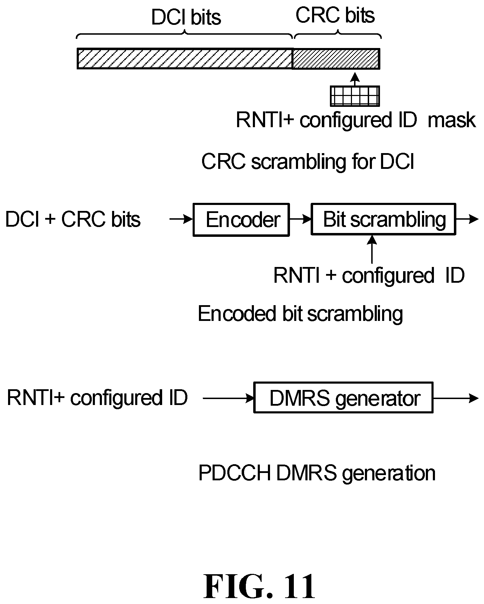

Fig. 11 illustrates examples of Cyclic Redundancy Check (CRC) scrambling for Downlink Control Information (DCI), encoded bit scrambling for DCI, and Physical Downlink Control Channel (PDCCH) Demodulation Reference Signal (DMRS) generation. The examples in Fig. 11 are for a Uu link.

Uu link scheduling has several options, including at least transmission on the Uu link being scheduled by network equipment such as a gNB, or relay UEs in cooperation receiving a single DCI (PDCCH).

For transmission on the Uu link scheduled by gNB, each relay UE may receive its own DCI (PDCCH). An identifier of the remote UE of the relay link, such as the remote UE RNTI, may be used for CRC scrambling, encoded bits scrambling, and DMRS generation. Another embodiment involves using a relay cooperation RNTI or other identifier for CRC scrambling, encoded bits scrambling, and DMRS generation. An identifier of the relay UE for a relay link, such as the relay UE RNTI, is used for CRC scrambling, encoded bits scrambling, and DMRS generation in a further embodiment. A higher layer configured identifier may be used in conjunction with an identifier such as one of the above identifiers, as shown in Fig. 11.

Embodiments for all relay UEs receiving a single DCI (PDCCH) include using a remote UE identifier such as an RNTI or a relay cooperation RNTI or other identifier for CRC scrambling, encoded bits scrambling, and DMRS generation. As shown in Fig. 11, a higher layer configured identifier may be used in conjunction with either of these identifiers.

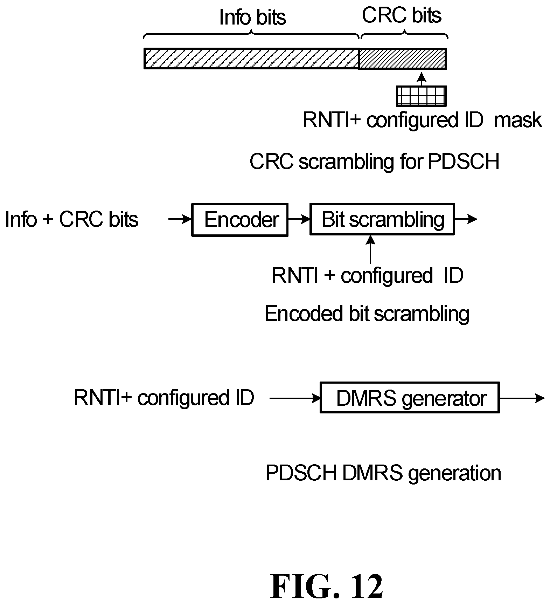

Fig. 12 illustrates examples of CRC scrambling for Physical Downlink Shared Channel (PDSCH), encoded bit scrambling for PDSCH, and PDSCH DMRS generation, for Uu link data transmission. In an embodiment, one or more PDSCH(s), including one for each relay link, are transmitted on a Uu link. An identifier such as an RNTI of the remote UE for the relay link(s), a relay cooperation identifier such as an RNTI, or an RNTI or other identifier of the relay UE for a relay link may be used for CRC scrambling, encoded bits scrambling, and DMRS generation, in conjunction with a higher layer configured identifier in the examples shown in Fig. 12.

The identifiers noted above in reference to Figs. 11 and 12 are just examples. Other embodiments may use combinations of these example identifiers and/or use one or more other identifiers.

CRC scrambling by masking, encoding by an encoder and applying bit scrambling to an encoded output of the encoder, and DMRS generation by a DMRS generator as shown in Figs. 11 and 12, are also illustrative and non-limiting examples.

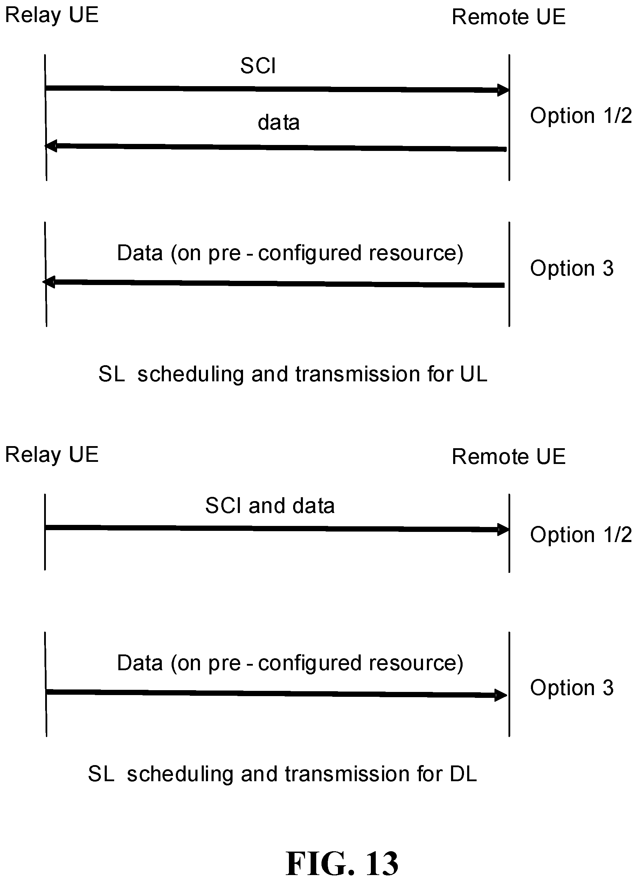

Fig. 13 is a signal flow diagram illustrating an example of the flow of sidelink scheduling and transmission according to an embodiment. The upper part of Fig. 13 illustrates sidelink scheduling and transmission for uplink, and the lower part of Fig. 13 illustrates sidelink scheduling and transmission for downlink.

Uplink transmission on sidelink is scheduled by network equipment such as a gNB in some embodiments. In a first option (Option 1) each relay UE sends Sidelink Control Information (SCI) to the remote UE. The SCI contains sidelink scheduling information that originates from gNB (mode 1 in V2X, for example). A second option (Option 2) involves the relay UE sending SCI that includes scheduling information as in Option 1, hence the label "Option 1/2" at the top right in Fig. 13, but in Option 2 the scheduling information originates from the relay UE (mode 2d in V2X, for example). The remote UE transmits uplink data on the sidelink to the relay UE according to the scheduling in Option 1 and Option 2. If more than one relay link is configured for a remote UE, such as an MRL and one or more SRL(s), for Option 1/2, the remote UE may detect SCI from the relay UE of each of the relay links for scheduling information, for example, from the MRU and the SRU(s). If the remote UE only detects one SCI, then it could only transmit uplink data in a Physical Shared Sidelink Channel (PSSCH) on the sidelink to that particular relay UE according to the scheduling information indicated in that SCI. If the remote UE detects two SCI(s), including one from a relay UE of each of two relay links respectively, then it could split or duplicate the data and transmit them in a separate PSSCH on sidelink to each relay UE according to the scheduling in the respective SCIs.

According to a third uplink option (Option 3) in Fig. 13, uplink transmission on a sidelink uses one or more pre-configured communication resources, and the remote UE transmits data on the sidelink to the relay UE using the pre-configured resource(s). For Option 3, the remote UE could be configured with more than one set of resources on sidelink (e.g., time-frequency resources) and corresponding parameters (e.g., DMRS, Modulation and Coding Scheme (MCS)), including one set for the remote UE to transmit data to each relay UE of each relay link, for example, one set of resources for the remote UE to transmit data to the MRU of the MRL and one set of resources for the remote UE to transmit data to the SRU of an SRL. These sets of resources could be orthogonal in one or more of time domain, frequency domain, and code domain or they could overlap or partially overlap while a DMRS that is configured could still be orthogonal. The remote UE could transmit data on either or both of the sets of resources to the corresponding relay UE of each relay link. The relay UE of each relay link could blindly detect the data transmission on each set of resources on sidelink and determine whether there is data transmitted from the remote UE to that relay UE. If the relay UE detects data transmission, then it can try to decode the data transmission.

Option 1/2 and Option 3 for downlink in Fig. 13 are similar to Option 1/2 and Option 3 for uplink, except that each relay UE transmits SCI and data both in the downlink direction to the remote UE.

If more than one relay link is configured for a remote UE, such as an MRL and one or more SRL(s), for Option 1/2, the remote UE may detect SCI from the relay UE of each of the relay links for scheduling information, for example, from the MRU and the SRU(s). If the remote UE only detects one SCI, then it could only receive downlink data in PSSCH on the sidelink from that particular relay UE according to the scheduling information indicated in that SCI. If the remote UE detects two SCI(s), including one from a relay UE of each of two relay links respectively, then it could receive data in a separate PSSCH on sidelink from each relay UE according to the scheduling information in the respective SCIs and aggregate the received data according to a data split between the relay links.

For Option 3, the remote UE could be configured with more than one set of resources on sidelink (e.g., time-frequency resources) and corresponding parameters (e.g., DMRS, MCS), including one set for each relay UE of each relay link to transmit data to the remote UE, for example, one set of resources for the MRU of the MRL to transmit data to the remote UE and one set of resources for the SRU of an SRL to transmit data to the remote UE. These sets of resources could be orthogonal in one or more of time domain, frequency domain, and code domain or they could overlap or partially overlap while a DMRS that is configured could still be orthogonal. The remote UE could blindly detect the data transmission on each set of resources on sidelink and determine whether there is data transmitted from the corresponding relay UE to the remote UE. If the remote UE detects data transmission, then it can try to decode the data transmission.

Other features may also or instead be provided for sidelink transmission. For example, any of CRC scrambling, encoded bits scrambling, and DMRS generation similar to the examples shown in Figs. 11 and 12 or described at least above may be applied to a PSSCH, using a remote UE identifier such as an RNTI, a relay cooperation identifier such as an RNTI, a higher layer configured identifier, or one or more other identifiers.

Taking the foregoing scheduling and transmission examples into consideration, an example of downlink transmission flow in the example system 200 in Fig. 2 according to an embodiment involves a gNB 202 scheduling Uu link 210 and sidelink 212, 214 transmission of downlink data, or the sidelink transmissions using one or more pre-configured communication resources. The gNB 202 sends a separate PDCCH and PDSCH over the Uu link 210 for each of the two relay links to the relay UEs 204, 208. The PDCCH for each relay UE 204, 208 is scrambled by the RNTI of that relay UE, and a field in DCI can be used to indicate a destination identifier of the remote UE 206. The PDSCH for each relay UE 204, 208 is also scrambled by the RNTI of that relay UE. Each relay UE 204, 208 then relays data to the remote UE 206 on its sidelink 212, 214 with the remote UE, in a separate PSSCH that is scrambled by remote UE ID.

As an example of uplink transmission flow for the example system 200, the remote UE pass its Scheduling Request (SR) or BSR to the gNB 202, through one of the relay links and a relay UE 204, 208 for example, and the gNB 202 schedules Uu link and sidelink transmission of uplink data. In some embodiments, the sidelink transmission uses one or more pre-configured communication resources. The remote UE transmits data on the sidelinks 212, 214, in a separate PSSCH, to each relay UE 204, 208. The PSSCH may be scrambled by a remote UE ID such as an RNTI. Each relay UE 204, 208 then relays the data in a Physical Uplink Shared Channel (PUSCH) to the gNB 202 on a Uu link 210. Each PUSCH is scrambled by a relay UE ID such as an RNTI in some embodiments. If the same data is transmitted over different relay links, then different Redundancy Versions (RVs) of the data packet may be transmitted. The association of relay link and RV can be semi-statically configured, in RRC signaling for example, or dynamically indicated, in DCI for example.

These are just illustrative examples of uplink and downlink transmission. Other embodiments are also possible. For example, transmission between a remote UE and another UE over UE-to-UE relay links as shown by way of example in Fig. 7B may be substantially similar uplink and downlink transmission between a network device and a remote UE.

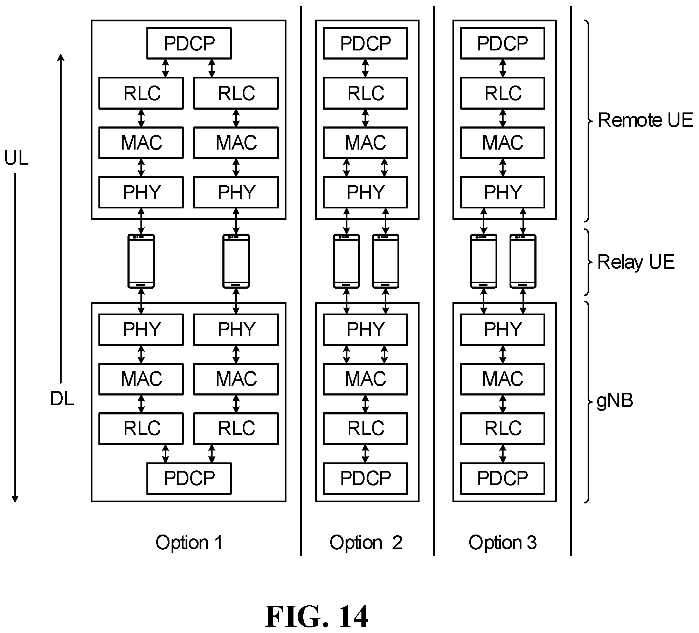

Fig. 14 is a block diagram illustrating example data splitting options for relay link coordination. Using multiple relay links to transmit data involves data splitting for transmission of different data, or data duplication for transmission of the same data, over multiple relay links. Data duplication may be considered a special case of data splitting, in which the same data are duplicated for transmission over two paths. Fig. 14 illustrates some general options.

At a transmitter, in particular a remote UE or network equipment such as a gNB in some embodiments, or one of two UEs in UE-to-UE relay link embodiments, data can be split or duplicated at any of several different layers. According to a first option (Option 1 in Fig. 14), data splitting or duplication is at the Packet Data Convergence Protocol (PDCP) layer. Option 1 may be used for L2 relay, for example. A second option (Option 2) involves data splitting or duplication at the Media Access Control (MAC) layer, at a Transport Block (TB) level, for example. Physical (PHY) layer data splitting or duplication, at a codeword or Code Block Group (CBG) level for example, is also shown in Fig. 14.

At a receiver, which may be the remote UE or network equipment such as a gNB in some embodiments, or one of two UEs in UE-to-UE relay link embodiments, data can be aggregated according to where the data splitting or duplication is implemented at the transmitter.

Fig. 14 is an example, and other embodiments may be implemented in a similar or different manner, in similar or different architectures.

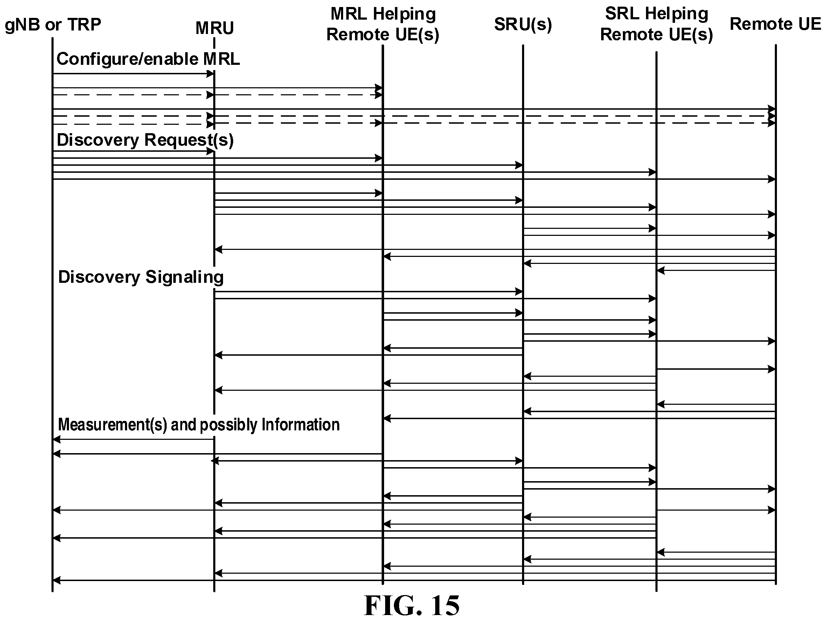

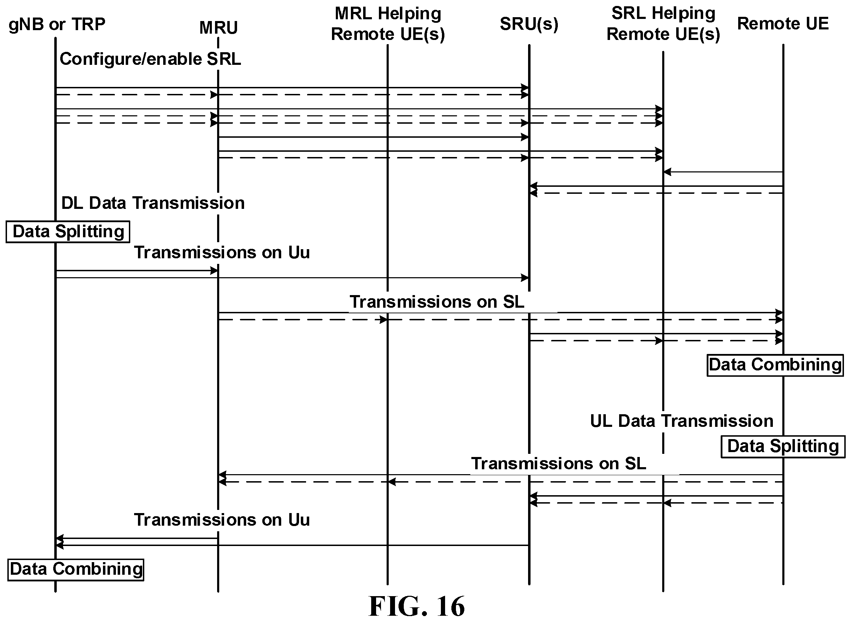

Fig. 15 is a signal flow diagram illustrating examples for configuring a relay link, which is an MRL in the example shown, and a discovery procedure. Fig. 16 is a signal flow diagram illustrating examples for configuring a further relay link, which is an SRL in the example shown, and relay link transmissions including downlink and uplink transmissions on either or both of MRL and SRL. Figs. 15 and 16 are intended to illustrate various scenarios. For example, a helping remote UE may or may not be involved in a relay link. A gNB or TRP may not be involved in a relay link in the case of UE-to-UE relay links, shown by way of example in Fig. 7B. In such links, features that are shown in Figs. 15 and 16 for a gNB or TRP may apply to a UE such as the UE 752 in Fig. 7B. It should also be noted that MRL, MRU, SRL, and SRU are shown in and described with reference to Figs. 15 and 16 solely as a convenience to distinguish different relay links and components of such links from each other. More generally, primary or major relay links or components and similarly secondary relay links or components may be considered examples of different, first and second for example, relay links or components.

The examples in these drawings are also not intended to be limiting or exhaustive, and the examples encompass some possible options. For example, in configuring the MRL in Fig. 15, configuration signaling may be transmitted from network equipment such as a gNB or a TRP to a helping remote UE in the MRL if that helping remote UE is in coverage, as shown by the second solid line at the top left of Fig. 15, or transmitted to an MRU and relayed to the MRL helping remote UE by the MRU, as shown by the dashed lines below that solid line. Different solid lines may also represent options rather than features that may be implemented in every embodiment. One or more discovery requests may be transmitted by the gNB or TRP in Fig. 15, for example, but not all, or even any, of the discovery requests illustrated in Fig. 15 need necessarily be transmitted by the gNB or TRP. As noted above, discovery is an optional procedure that might not be performed at all.

The signaling in Figs. 15 and 16 covers a multitude of options that may be applicable to any of various scenarios, including those described at least above, and is illustrative of the wide array of possibilities that may be implemented in embodiments. Even as extensive as the signaling in Figs. 15 and 16 may appear to be, other embodiments may include additional features. For example, relay UEs may perform operations such as data processing and/or decoding on data that is received over a Uu link before that data is relayed to the remote UE or to a helping remote UE. Similarly, relay UEs may perform operations such as data processing and/or decoding on data that is received over a sidelink link before that data is relayed to the gNB or TRP over a Uu link.

In general, although Figs. 15 and 16 encompass many embodiments, other embodiments may include additional, fewer, and/or different features.

Various features are described in detail at least above. More generally, a method according to an embodiment involves coordinating, with a primary relay link between UE and a wireless communication network, configuration of a secondary relay link between the UE and the wireless communication network. A method in an embodiment also involves communicating signaling to enable configuration of the secondary relay link in accordance with the coordinating. A primary relay link and a secondary relay link are referred to herein as an MRL and an SRL, respectively. "Primary relay link" is synonymous with and interchangeable with "MRL", and similarly "secondary relay link" is synonymous with and interchangeable with SRL.

Other terminology and features are also supported herein, including first and second relay links and components thereof, and relay links that are not necessarily between a UE and a wireless communication network. For example, according to another embodiment a method involves coordinating, with a first relay link for a UE in a wireless communication network, configuration of a second relay link for the UE; and communicating signaling to enable configuration of the second relay link in accordance with the coordinating. The first relay link and the second relay link may be or include relay links between the UE and a network device in the wireless communication network, or relay links between the UE and another UE.

As will be evident from Figs. 15 and 16, for example, relay link coordination may involve participation by any of various components, including one or more gNBs or other network equipment, one or more UEs, or both network equipment and one or more UEs. Coordination and communications may take any of various forms, depending upon a particular component that is being considered and its role(s) in configuring or using relay links. Components that are involved in a first relay link or an MRL, for example, may have a more active role in coordinating configuration of an SRL than components that may be involved in a second relay link, an SRL, a candidate second relay link, or a candidate SRL.

Consider an MRU, which is a relay UE of a first relay link, as an example. The MRU may transmit a discovery request to one or more other components when the MRL or first relay link has been configured. From the MRU perspective, communicating signaling in this example involves transmitting signaling in the form of the discovery request. From the perspective of a receiving component, such as a candidate second relay UE or SRU, coordinating with the MRL involves receiving the discovery request from the MRU in this example, and communicating signaling may involve the candidate SRU transmitting discovery signaling. This is just one example of how features that are disclosed herein may be embodied or implemented in different ways by different components.

Simply for the purpose of illustration, Fig. 7A is referenced in the description below. Fig. 7A is chosen as a convenient example because it includes network equipment 202, relay UEs 204, 208, a remote UE 206, and helping remote UEs 704, 708. Other embodiments may include fewer, additional, or different components. In the case of UE-to-UE relay links, for example, features that are described by way of example with reference to the network equipment 202 may apply to another UE such as the UE 752 in Fig. 7B.

Consider an example scenario in which an MRL is configured between the network equipment 202 and the remote UE 206 through the relay UE 208, which is the MRU in this example, and the helping remote UE 708. An initial decision may be made as to whether an SRL is to be established or attempted. Coordinating configuration of the SRL with the MRL in this example may involve making such an initial decision by determining whether an SRL setup condition associated with the MRL is satisfied. The operation of communicating signaling as referenced above may then involve communicating the signaling, related to determining that the SRL setup condition is satisfied. Such determining as to whether an SRL setup condition associated with the MRL is satisfied may be performed by a component that is involved in the MRL, such as a gNB or other network equipment 202, a UE such as the UE 752 (Fig. 7B) in the case of a UE-to-UE relay link, the MRU 208, the helping remote UE 708, or the remote UE of the primary relay link. An SRL setup condition may include any one or more of: configuration of the MRL such as initiation or completion of MRL configuration, a determination that communication diversity is to be provided for communications with the remote UE 206, a determination that higher aggregate bandwidth is to be provided for communications with the remote UE, and a determination that lower communication latency is to be provided for communications with the remote UE. In some scenarios, a single relay link may be sufficient, and a determination may be made that no SRL is needed.

Some embodiments involve signaling in the form of a discovery request as noted above, and therefore the above-referenced operation of communicating signaling may involve communicating the signaling, from a component that is involved in the MRL to one or more other components for example, to cause the other component(s) to transmit discovery signaling. The discovery signaling enables identification of a candidate relay link for configuration as the SRL. In the context of the above example referring to Fig. 7A, MRL components that may transmit one or more discovery requests include the network equipment 202, the MRU 208, the helping remote UE 708, and the remote UE 206, and a UE such as the UE 752 (Fig. 7B) may transmit one or more discovery requests in the case of a UE-to-UE relay link. Any one or more of these components may transmit one or more discovery request signals to one or more other components.

The other component(s) to which a discovery request is transmitted may include one or more of: the remote UE 206, a further component such as either or both of the MRU 208 or the helping remote UE 708 involved in the MRL, and a candidate component through which the SRL may be configured, such as either or both of the candidate SRU 204 and the candidate helping remote UE 704. These components and a relay link that may be configured through these components are referred to as candidates because the SRL has not yet been configured in this example.

In some embodiments a component may send discovery signaling without necessarily first receiving a discovery request, such as when MRL configuration has been completed and the MRL has been set up. Therefore, communicating signaling as referenced above may involve transmitting discovery signaling that enables identification of a candidate relay link for configuration as the SRL, without necessarily first receiving other signaling. For example, any one or more of the MRU 208, the helping remote UE 708, and the remote UE 206 may detect that the MRL has been configured, and then broadcast or otherwise transmit discovery signaling without having first received a discovery request.

Discovery signaling as disclosed herein may be or include reference signaling, such as CSI-RS or DMRS for example, as noted above.

Discovery requests and discovery signaling are illustrative of signaling that may be received in some embodiments and may be involved in the above-referenced coordinating. Such coordinating may therefore involve receiving signaling that is associated with the MRL, and such signaling may be received by any one or more of the MRU 208, a candidate SRU such as 204, the remote UE 206, and one or more helping remote UEs such as 708 in the MRL or a candidate SRL for example. From the perspective of a component that awaits signaling and then performs an action when that signaling is received, the above-referenced operation of communicating signaling to enable configuration of the SRL is responsive to receiving the signaling, such as a discovery request or discovery signaling, that is associated with the MRL. In the discovery request and discovery signaling example, the signaling associated with the MRL is or includes signaling to cause transmission of the discovery signaling, which as noted above enables identification of a candidate relay link for configuration as the SRL, and the above-referenced operation of communicating signaling to enable configuration of the SRL involves transmitting the discovery signaling.

From the perspective of a receiving component that receives discovery signaling, the discovery signaling is a form of signaling that is associated with the MRL and initiates action by the receiving component in some embodiments. A method may involve performing a measurement based on the discovery signaling, for example. In embodiments that involve performing a measurement, the above-referenced operation of communicating signaling to enable configuration of the SRL may involve transmitting signaling associated with the measurement. Such signaling associated with a measurement may be or include one or more of: signaling indicative of the measurement, and signaling indicative of whether the measurement satisfies a condition for configuring, as the SRL, a relay link that includes a link with a component from which the discovery signaling was received. Therefore, a component that performs a measurement may report or feed back not only the measurement itself, but also or instead a decision as to whether the measurement satisfies a condition such as minimum signal strength, to support an SRL. That decision may instead be made by a component to which the measurement is reported. Additional information associated with the candidate relay link for which a measurement is performed may also be communicated. Communication of measurements and/or additional information are described by way of example with reference to 810-840, 910-930 in Figs. 8 and 9, respectively.

With reference again to Fig. 7A, components that may receive discovery signaling include any one or more of the MRU 208, one or more helping remote UEs such as 708, the remote UE 206, the candidate SRU 204, and one or more candidate helping remote UEs such as 704. Any of these components that receives discovery signaling may perform one or more measurements, and possibly make a decision based on the measurement(s). The measurement(s), a decision based on the measurement(s), or both, may be reported or fed back to any other component, including the network equipment 202, or a UE such as the UE 752 (Fig. 7B) in the case of UE-to-UE relay links. In some embodiments, decisions based on measurements are made by a component that receives measurements from one or more other components. A final decision regarding a candidate SRL, a candidate SRU, or other candidate SRL component(s) through which an SRL is to be configured, may be made by the network equipment 202 or another component such as the MRU 208 or the remote UE 206, for example, or by a UE such as the UE 752 (Fig. 7B) in the case of UE-to-UE relay links.

In some embodiments, communicating signaling to coordinate configuration of an SRL involves transmitting by one or more components that are not part of the MRL, such as one or both the candidate SRU 204 or the helping remote UE 704 of the candidate SRL in Fig. 7A. In general, signaling associated with the MRL, which initiates action by one or more other components, may be transmitted by one or more components that are involved in the MRL. Such signaling may also or instead be transmitted by one or more components that are not involved in the MRL.

Considering now some features related to actually configuring the SRL, the coordinating as referenced above may involve receiving signaling that is indicative of a candidate relay link for configuration as the SRL. Such signaling may be or include, for example: the remote UE 206 signaling the MRU 208 as to which candidate SRU(s) to contact, in a scenario in which the remote UE 206 is aware of the candidate SRU 204 through an information exchange with the helping remote UE 704 for example; measurement reporting, which may indicate the link(s) for which measurement was performed; signaling indicating that measurements satisfy conditions to set up an SRL; and signaling back to the network equipment 202 to specify a candidate SRL that is to be configured as the SRL, such as by identifying the candidate SRL or components of the candidate SRL such as either or both of the relay UE 204 and the helping remote UE 704 in Fig. 7A.

In the context of SRL configuration, the above-referenced operation of communicating signaling to enable configuration of the SRL may involve transmitting, from a component that is involved in the MRL, configuration signaling to configure the SRL. Although it is possible that actual configuration of the SRL may be handled by a gNB or other network equipment such as 202, or a UE such as the UE 752 (Fig. 7B) in the case of UE-to-UE relay links, other components may be involved as disclosed herein. One or more of the MRU 208, the candidate SRU 204, the helping remote UE 708, the helping remote UE 704, and the remote UE 206, for example, may at least relay configuration signaling to one or more other components that are to be configured in order to set up an SRL. Configuration signaling may be generated by the network equipment 202, or a UE such as the UE 752 (Fig. 7B) in the case of UE-to-UE relay links, and relayed by one or more of these other components. In some embodiments, configuration signaling need not necessarily originate only from the network equipment 202, or a UE such as the UE 752 (Fig. 7B) in the case of UE-to-UE relay links. The MRU 208, for example, may generate and transmit configuration signaling.

With an MRL and an SRL configured for a UE, between a UE and a wireless communication network or between the UE and another UE as in Fig. 7B for example, a method may involve coordinating communications with the UE over the MRL and the SRL. In Fig. 7A, the network equipment 202 and the remote UE 206 may communicate with each other over both the MRL through the MRU 208 and the helping remote UE 708 and the SRL through the SRU 204 and the helping remote UE 704. UEs may also or instead communicate with each other through relay links as shown by way of example in Fig. 7B.

Coordinating communications through an MRL and an SRL may involve, for example, determining a data split for communications with the remote UE over the MRL and the SRL. One or more of the following may be performed in some embodiments: transmitting signaling indicative of the data split to one or more components involved in the MRL; transmitting signaling indicative of the data split to one or more components involved in the SRL; splitting data, such as received data, in accordance with the data split for transmission over the MRL and the SRL; and aggregating received data in accordance with the data split for transmission over the MRL and the SRL.

As an example, the network equipment 202, or a UE such as the UE 752 (Fig. 7B) in the case of UE-to-UE relay links, may determine how data should be split between the MRL and the SRL, and transmit signaling indicative of this data split to at least the remote UE 206 so that the remote UE is able to aggregate received data in accordance with the data split. In other embodiments, the MRU 208 may determine and signal the data split to one or more other components such as the network equipment 202, or a UE such as the UE 752 (Fig. 7B) in the case of UE-to-UE relay links, and the remote UE 206. A data split may also or instead be determined by the remote UE 206 and signaled to the network equipment 202, or a UE such as the UE 752 (Fig. 7B) in the case of UE-to-UE relay links.

Actual splitting and aggregation of data may also be handled by any of various components. For the example in Fig. 7A, data splitting is handled by the network equipment 202 and data aggregation is handled by the remote UE 206 for downlink transmission, and for uplink transmission data splitting is handled by the remote UE and data aggregation is handled by the network equipment. Other embodiments are also possible. Consider the example in Fig. 6, in which data splitting for downlink transmission and data aggregation for uplink transmission may be handled by the relay UE 208. As another example, consider Fig. 7B, in which data splitting for transmission toward the remote UE 206 and data aggregation for transmission of data in the opposite direction may be handled by the UE 752.

Signaling indicative of a data split may be or include SCI, for example, in which case the splitting and aggregating are in accordance with received SCI. In other embodiments, pre-configured communication resources are used. Data splitting may then involve, for example, splitting data, such as received data, for transmission over pre-configured communication resources associated with the primary relay link and the SRL, and the received data for the aggregating may include data received over pre-configured communication resources associated with the primary relay link and the SRL. SCI and pre-configured resource examples are discussed in further detail at least above with reference to Fig. 13.

Some embodiments support switching between multi-link and single-link communications. For example, coordinating communications over an MRL and an SRL may involve determining whether communications with the remote UE 206 over both the MRL and the SRL are to be maintained. Multi-link communications may no longer be needed to support a higher data rate for communications with the remote UE 206, for example. Communications with the UE over only the MRL may then be enabled responsive to determining that communications over both the MRL and the SRL are not to be maintained. This is an example of multi-link to single-link switching. For switching from single-link to multi-link communications, coordinating communications over the MRL and the SRL may involve determining whether communications with the remote UE 206 over only the MRL are to be maintained, and enabling communications with the remote UE over both the MRL and an SRL responsive to determining that communications with the UE over only the primary relay link are not to be maintained. This may involve reconfiguring the same SRL that was previously used or configuring a further SRL. Thus, when switching to multi-link communications, an SRL may or may not be the same as an SRL that was previously used.

MRL/SRL role switching is also possible. An MRU may be reconfigured as an SRU, and an SRU may be reconfigured as an MRU for example. Such reconfiguration may be performed by network equipment in some embodiments, or by a UE such as the UE 752 (Fig. 7B) in the case of UE-to-UE relay links.

Any one or more of various components may be involved in operations disclosed herein. For example, any one or more of the following may be handled by the MRU 208 in Fig. 7A: determining a data split, determining whether communications with the remote UE 206 over the MRL and the SRL are to be maintained, enabling communications with the remote UE over only the MRL responsive to determining that communications with the remote UE over the MRL and the SRL are not to be maintained, determining whether communications with the remote UE over only the MRL are to be maintained, enabling communications with the remote UE over the MRL and the SRL or a further SRL responsive to determining that communications with the remote UE over only the MRL are not to be maintained, and performing one or more of: transmitting signaling indicative of the data split to one or more components involved in the MRL; transmitting signaling indicative of the data split to one or more components involved in the SRL; splitting data, such as received data, in accordance with the data split for transmission over the MRL and the SRL; and aggregating received data in accordance with the data split for transmission over the MRL and the SRL. These and/or other operations may also or instead be performed by other components, such as one or more of the network equipment 202, an SRU such as 204, a helping remote UE such as 704, 708, and the remote UE 206.

Considering the SRU 204 as an example, coordinating communications over the MRL and the SRL may involve the SRU performing one or more of: receiving signaling indicative of a data split determined for communications with the remote UE 206 over the MRL and the SRL; splitting data, such as received data, in accordance with the data split for transmission over the SRL; disabling communications with the remote UE over the SRL responsive to signaling received from the MRU 208, and enabling communications with the remote UE over the SRL responsive to signaling received from the MRU.

From the perspective of the remote UE 206, coordinating communications may involve the remote UE performing such actions as one or more of: receiving signaling indicative of a data split determined for communications with the UE over the MRL and the SRL; splitting data, in accordance with the data split, for transmission over the MRL and the SRL; aggregating, in accordance with the data split, data received over the MRL and the SRL; disabling communications over the SRL responsive to signaling received from the MRU 208, and enabling communications with the remote UE over the SRL or a further SRL responsive to signaling received from the MRU.

Other features disclosed herein may also be provided in some embodiments. For example, in some embodiments the MRL includes at least one relay UE 208 that is within a coverage area of the wireless communication network, and the remote UE 206 is outside the coverage area of the wireless communication network. The MRL may include a helping remote UE such as 708 that is outside the coverage area of the wireless communication network and is in communication with the relay UE 208 and the remote UE 206. Similarly, an SRL may include at least one secondary relay UE 204 that is within the coverage area of the wireless communication network, with the remote UE 206 being outside the coverage area, and in some embodiments a secondary helping remote UE 704 that is outside the coverage area and is in communication with the secondary relay UE and the remote UE.

The example methods described above are intended to be illustrative and non-limiting. Another method involves receiving, by a component that is involved in an MRL for a UE, such as a relay link between a remote UE and a wireless communication network, signaling indicative of a measurement performed by a first UE for a direct wireless communication link such as a sidelink between the first UE and a second UE. Referring again to Fig. 7A, any one or more of the network equipment 202, the MRU 208, the helping remote UE 708, and the remote UE 206 may receive measurement signaling, and possibly other information related to a direct wireless communication link such as a sidelink. A UE such as the UE 752 (Fig. 7B) in the case of UE-to-UE relay links may also or instead receive measurement signaling and possibly other information related to a direct wireless communication link.

Based on the received signaling, a determination is made as to whether an SRL between the remote UE and the wireless communication network should be established through the direct wireless communication link. Configuration signaling to configure the SRL is transmitted responsive to determining that the SRL should be established through the direct wireless communication link.

Although the remote UE 206 is part of the MRL, the remote UE may also be involved in a sidelink that is part of a candidate SRL. Consider a scenario in which the remote UE 206 performs a measurement for the sidelink 712. In this scenario the remote UE 206 is the above-referenced first UE that performs the measurement. In another scenario, the helping remote UE 704 performs a measurement for the sidelink 712, in which case the helping remote UE 704 is the above-referenced first UE that performs the measurement and the remote UE 206 is the above-referenced the second UE that is involved in the sidelink for which the measurement is performed. Thus, the remote UE 206 may be the above-referenced first UE or the above-referenced second UE.

A method may include transmitting, by the component that is involved in the primary relay link and receives the measurement signaling, further signaling to enable the first UE to perform the measurement. This further signaling may be or include discovery signaling for example.

Some embodiments include transmitting, by the component that is involved in the primary relay link and receives the measurement signaling, further signaling to cause the second UE to transmit to the first UE signaling to enable the first UE to perform the measurement. With reference to Fig. 10, for example, a discovery request may be transmitted by the remote UE 206 to the helping remote UE 1004 to cause the helping remote UE 1004 to transmit discovery signaling to the relay UE 204, which in turn performs a measurement for the sidelink 1012 and transmits measurement signaling back to the remote UE 206.

Another method consistent with the present disclosure relates to switching types or roles of relay links, such as MRL / SRL roles. For example, such a method may involve configuring an MRL to carry data and one or both of control and feedback information between a UE and a wireless communication network; configuring an SRL to carry data between the UE and the wireless communication network; and, responsive to a relay link role switch condition, reconfiguring the SRL as a new MRL to carry data and one or both of control and feedback information between the UE and the wireless communication network and reconfiguring the MRL as a new SRL to carry data between the UE and the wireless communication network. Data and one or both of control and feedback information may be carried between a UE and a wireless communication network in some embodiments, or otherwise communicated with a UE as in the case of UE-to-UE relay links for example.

Further features disclosed herein may also or instead be implemented in conjunction with such methods.

Embodiments are described above primarily in the context of example methods. Other embodiments are also possible.

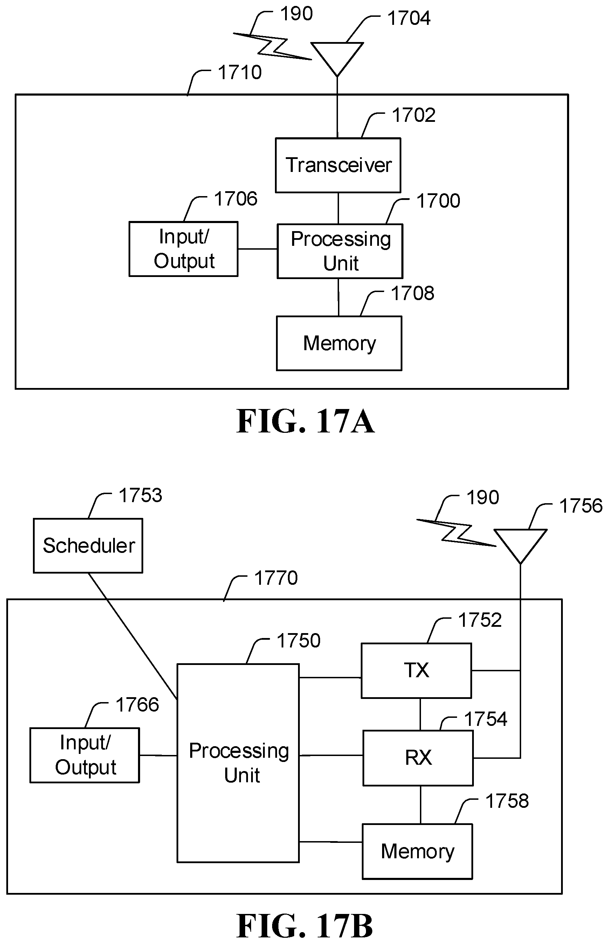

See, for example, Figs. 17A and 17B which illustrate example devices that may implement the methods and teachings according to this disclosure.

Fig. 17A illustrates an example ED 1710, and Fig. 17B illustrates an example base station 1770. These components could be used in the system 100 (Fig. 1) or in any other suitable system.

As shown in Fig. 17A, the ED 1710 includes at least one processing unit 1700. The processing unit 1700 implements various processing operations of the ED 1710. For example, the processing unit 1700 could perform signal coding, data processing, power control, input processing, output processing, or any other functionality enabling the ED 1710 to operate in a communication system. The processing unit 1700 may also be configured to implement some or all of the functionality or embodiments described in more detail herein. Each processing unit 1700 includes any suitable processing or computing device configured to perform one or more operations. Each processing unit 1700 could, for example, include a microprocessor, microcontroller, digital signal processor, field programmable gate array, or application specific integrated circuit.

The ED 1710 also includes at least one transceiver 1702. The transceiver 1702 is configured to modulate data or other content for transmission by at least one antenna or NIC (Network Interface Controller) 1704. The transceiver 1702 is also configured to demodulate data or other content received by the at least one antenna 1704. Each transceiver 1702 includes any suitable structure for generating signals for wireless transmission and/or processing signals received wirelessly or by wire. Each antenna 1704 includes any suitable structure for transmitting and/or receiving wireless signals. One or multiple transceivers 1702 could be used in the ED 1710, and one or multiple antennas 1704 could be used in the ED 1710. Although shown as a single functional unit, a transceiver 1702 could be implemented using at least one transmitter and at least one separate receiver.

The ED 1710 further includes one or more input/output devices 1706 or interfaces. The input/output devices 1706 facilitate interaction with a user or other devices (network communications) in the network. Each input/output device 1706 includes any suitable structure for providing information to or receiving/providing information from a user, such as a speaker, microphone, keypad, keyboard, display, or touch screen, including network interface communications.

In addition, the ED 1710 includes at least one memory 1708. The memory 1708 stores instructions and data used, generated, or collected by the ED 1710. For example, the memory 1708 could store software instructions or modules configured to implement some or all of the functionality or embodiments described above and that are executed by the processing unit(s) 1700. Each memory 1708 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Fig. 17B, the base station 1770 includes at least one processing unit 1750, at least one transmitter 1752, at least one receiver 1754, one or more antennas 1756, at least one memory 1758, and one or more input/output devices or interfaces 1766. A transceiver, not shown, may be used instead of the transmitter 1752 and receiver 1754. A scheduler 1753 may be coupled to the processing unit 1750. The scheduler 1753 may be included within or operated separately from the base station 1770. The processing unit 1750 implements various processing operations of the base station 1770, such as signal coding, data processing, power control, input processing, output processing, or any other functionality. The processing unit 1750 can also be configured to implement some or all of the functionality or embodiments described in more detail herein. Each processing unit 1750 includes any suitable processing or computing device configured to perform one or more operations. Each processing unit 1750 could, for example, include a microprocessor, microcontroller, digital signal processor, field programmable gate array, or application specific integrated circuit.

Each transmitter 1752 includes any suitable structure for generating signals for wireless transmission to one or more EDs or other devices. Each receiver 1754 includes any suitable structure for processing signals received wirelessly or by wire from one or more EDs or other devices. Although shown as separate components, at least one transmitter 1752 and at least one receiver 1754 could be combined into a transceiver. Each antenna 1756 includes any suitable structure for transmitting, receiving, or both transmitting and receiving wireless signals. While a common antenna 1756 is shown here as being coupled to both the transmitter 1752 and the receiver 1754, one or more antennas 1756 could be coupled to the transmitter(s) 1752, and one or more separate antennas 1756 could be coupled to the receiver(s) 1754. Each memory 1758 includes any suitable volatile and/or non-volatile storage and retrieval device(s) such as those described above in connection to the ED 1710. The memory 1758 stores instructions and data used, generated, or collected by the base station 1770. For example, the memory 1758 could store software instructions or modules configured to implement some or all of the functionality or embodiments described herein and that are executed by the processing unit(s) 1750.

Each input/output device 1766 facilitates interaction with a user or other devices (network communications) in the network. Each input/output device 1766 includes any suitable structure for providing information to or receiving/providing information from a user, including network interface communications.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. Other steps may be performed by these or other modules. The respective units or modules may be implemented using hardware, components that execute software, or a combination thereof. For instance, one or more of the units or modules may be or include one or more integrated circuits, such as field programmable gate arrays (FPGAs) or application-specific integrated circuits (ASICs). It will be appreciated that where the modules are implemented using software, they may be retrieved by a processor, in whole or part as needed, individually or together for processing, in single or multiple instances, and that the modules themselves may include instructions for further deployment and instantiation.

In general, hardware, firmware, components which execute software, or some combination thereof could be used in implementing features disclosed herein. Electronic devices that might be suitable for implementing any or all of these components include, among others, microprocessors, microcontrollers, Programmable Logic Devices (PLDs), Field Programmable Gate Arrays (FPGAs), Application Specific Integrated Circuits (ASICs), and other types of "intelligent" integrated circuits.

Any of various types of memory devices could be implemented. Either or both of the memory 1708 and the memory 1758, for example, could include one or more physical memory devices. Solid-state memory devices such as a Flash memory device could be implemented. Memory devices with movable or even removable storage media could also or instead be implemented.

Fig. 17A and Fig. 17B illustrate examples of a UE and network equipment, respectively, in which embodiments could be implemented. More generally, an apparatus may include a processor and a non-transitory computer readable storage medium, such as the processing unit 1700, 1750 and memory 1708, 1758 in Fig. 17A or Fig. 17B. Such an apparatus may be a UE, including a relay UE, a source UE, a destination UE, a helping remote UE, or a remote UE. Another example of an apparatus is network equipment, which may be a gNB, a TRP, a base station, or any other type of network equipment referenced herein. In an embodiment, the storage medium stores programming for execution by the processor, and the programming includes instructions to perform a method as disclosed herein. For example, the instructions, when executed by a processor, may cause the processor to perform any of various operations.

Another embodiment relates to a computer program product that includes a non-transitory computer readable storage medium storing programming. The programming includes instructions to perform a method as disclosed herein.

In some embodiments, the programming includes instructions to cause a processor to coordinate, with a primary relay link between a UE and a wireless communication network, configuration of a secondary relay link between the UE and the wireless communication network; and to communicate signaling to enable configuration of the secondary relay link in accordance with the coordinating. In another embodiment, the programming includes instructions to cause a processor to perform a method that involves coordinating, with a first relay link for a UE in a wireless communication network, configuration of a second relay link for the UE; and communicating signaling to enable configuration of the second relay link in accordance with the coordinating. As in other embodiments, the first relay link and the second relay link may be or include relay links between the UE and a network device in the wireless communication network, or relay links between the UE and another UE.

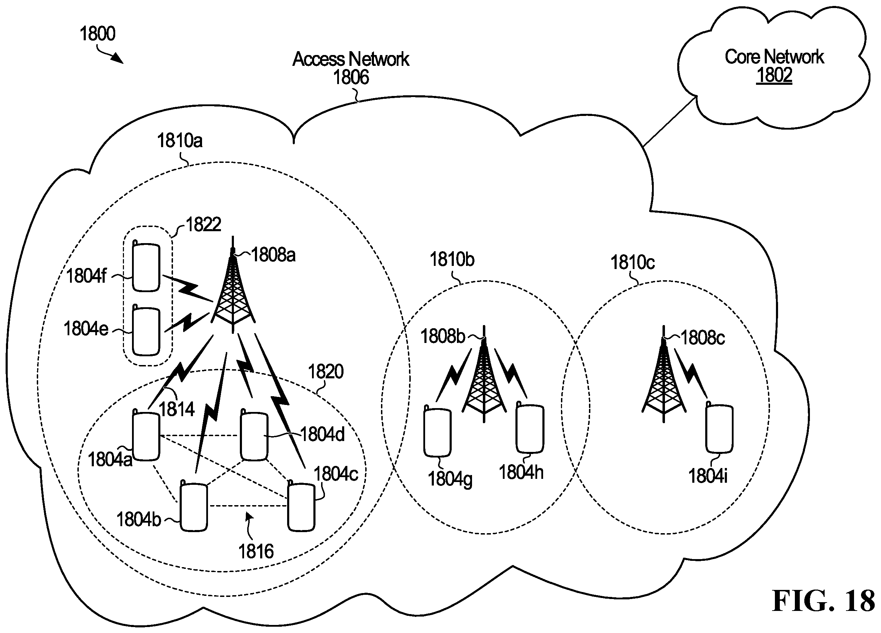

Fig. 18 is a block diagram illustrating an example of a telecommunications network 1800 according to one embodiment. The telecommunications network 1800 includes a core network 1802 and an access network 1806. The access network 1806 serves a plurality of UEs 1804a, 1804b, 1804c, 1804d, 1804e, 1804f, 1804g, 1804h, and 1804i. The access network 1806 is an Evolved Universal Terrestrial Access (E-UTRA) network in some embodiments. Another example of an access network 1806 is a cloud access network (C-RAN). The access network 1806 includes a plurality of BSs 1808a, 1808b, and 1808c. The BSs 1808a-c each provide a respective wireless coverage area 1810a, 1810b, and 1810c, also referred to as a cell. Each of the BSs 1808a-c could be implemented using a radio transceiver, one or more antennas, and associated processing circuitry, such as antenna radio frequency (RF) circuitry, one or more analog-to-digital converters, one or more digital-to-analog converters, etc.

Although not illustrated, the BSs 1808a-c are each connected to the core network 1802, either directly or through one or more central processing hubs, such as servers. The BSs 1808a-c could serve as a gateway between the wireline and wireless portion of the access network 1806.

Each one of BSs 1808a-c may instead be referred to as a base transceiver station, a radio BS, a network node, a transmit node, a transmit point, a Node B, an eNode B, a remote radio head (RRH), or otherwise, depending upon the implementation.

In operation, the plurality of UEs 1804a-i access the telecommunications network 1800 using the access network 1806 by wirelessly communicating with one or more of the BSs 1808a-c.

UEs 1804a-d are in close proximity to each other. Although the UEs 1804a-d can each wirelessly communicate with the BS 1808a, they can also directly communicate with each other, as represented at 1816. The communications represented at 1816 are direct communications between UEs, such as sidelink communications as disclosed herein, that do not go through an access network component, such as a BS. As shown in Fig. 18, UE to UE communications 1816 are directly between the UEs 1804a-d and are not routed through the BS 1808a, or any other part of the access network 1806. Communications 1816 may also be referred to as lateral communications. In embodiments disclosed herein, UE to UE communications use a sidelink channel and a sidelink air interface. On the other hand, a communication between an access network component, such as BS 1808a, and a UE, as in communication 1814, is called an access communication. An access communication occurs over an access channel, which can be a uplink or downlink channel, and an access communication uses a radio access communication interface, such as a cellular radio access air interface. Access and sidelink air interfaces may use different transmission formats, such as different waveforms, different multiple access schemes, or different radio access technologies. Some examples of radio access technologies that could be used by an access air interface or a sidelink air interface are: Long Term Evolution (LTE), LTE License Assisted Access (LTE-LAA), and WiFi.

By using the sidelink communications 1816, the UEs 1804a-d may be able to assist with wireless communications between the UEs 1804a-d and the BS 1808a. As one example, if UE 1804c fails to correctly decode a packet received from the BS 1808a but UE 1804d is able to receive and correctly decode the packet from the BS 1808a, then UE 1804d could directly transmit the decoded packet to UE 1804c using sidelink communications 1816. As another example, if UE 1804c moves out of wireless coverage area 1810c, such that UE 1804c can no longer wirelessly communicate with the BS 1808a, then UE 1804b could forward messages between the UE 1804c and the BS 1808a. As another example, UE 1804a and UE 1804c could both receive a signal transmitted from the BS 1808a that carries a packet meant for UE 1804c. UE 1804a may then transmit to UE 1804c, via sidelink communications 1816, the signal as received by UE 1804a. UE 1804c may then use the information received from UE 1804a to help decode the packet from the BS 1808a. In these examples, capacity or coverage may be enhanced through the assistance of one or more of the UEs 1804a, 1804b, and 1804d.

The UEs 1804a-d form a UE group 1820 in some embodiments. It should be noted, however, that relay links as disclosed herein are not dependent upon UE groups.

The access network 1806 could assign a group identifier (ID) to the UE group 1820. The UE group ID may allow the access network 1806 to address the UE group 1820 as a whole and distinguish the UE group 1820 from other UE groups. The UE group ID may also be used to broadcast information within the UE group; that is, address all other UEs within the UE group 1820. The UE group 1820 may form a logical or virtual device mesh in which the members of the UE group 1820 communicate amongst themselves using UE communications over a sidelink air interface, but the UE group 1820 as a whole acts as a single distributed virtual transceiver with respect to the access network 1806. The UE group ID may be a group radio network temporary identifier (G-RNTI), for example.

When a particular UE in the UE group 1820, such as the UE 1804c, is being assisted or is to be assisted with wireless communication between that UE and the BS 1808a, then the other UEs 1804a, 1804b, and 1804d in the group 1820 may be considered candidates to be a relay UE or a helping UE. In a group-based embodiment, the subset of UEs in that actually assist the UE 1804c form a cooperation active set or a cooperation group. The cooperation active set may be dynamically selected to assist the UE 1804c.

In UE group 1820, UEs 1804a, 1804b, and 1804d form a cooperation candidate set. If UEs 1804a and 1804b actually assist the UE 1804c, then the UEs 1804a and 1804b form the cooperation active set. As UEs 1804a-d move around, some may leave the UE group 1820. UE movement may also or instead result in other UEs joining the UE group 1820. Therefore, the cooperation candidate set may change over time. For example, the cooperation candidate set may change semi-statically. The UE group 1820 may also be terminated by the network 1806, for example, if the network determines that there is no longer a need or opportunity for the UE group 1820 to provide assistance in wireless communication between the BS 908a and members of the UE group 1820.

There may be more than one UE group. For example, UEs 1804e and 1804f in Fig. 18 form another UE group 1822.

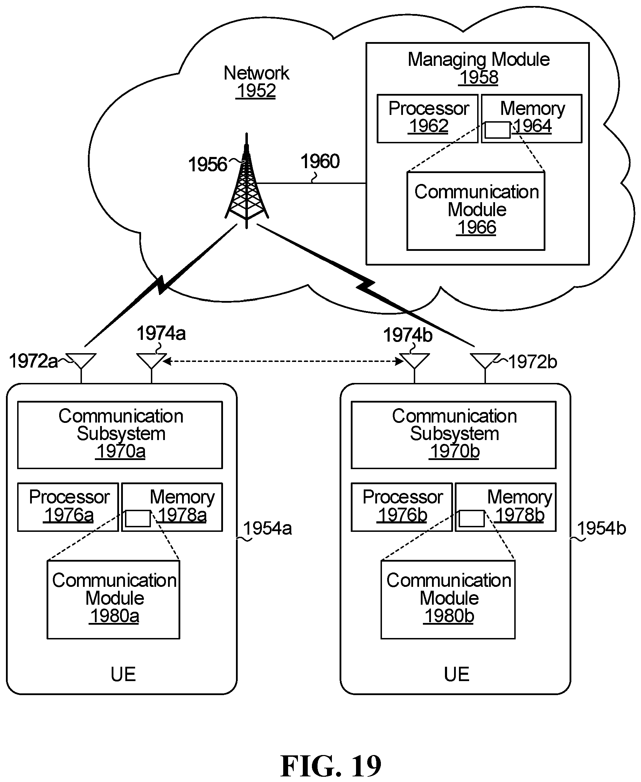

Fig. 19 is a block diagram illustrating an example of a network 1952 serving two UEs 1954a and 1954b, according to one embodiment. The network 1952 may be the access network 1806 from Fig. 18, and the two UEs 1954a and 1954b may be two of the four UEs 1804a-d in Fig. 18, or the UEs 1954a and 1954b may be UEs 1804e and 1804f in Fig. 18. However, more generally this need not be the case, which is why different reference numerals are used in Fig. 19.

The network 1952 includes a BS 1956 and a managing module 1958. The managing module 1958 instructs the BS 1956 to perform actions. The managing module 1958 is illustrated as physically separate from the BS 1956 and coupled to the BS 1956 via a communication link 1960. For example, the managing module 1958 may be part of a server in the network 1952. Alternatively, the managing module 1958 may be part of the BS 1956.

The managing module 1958 includes a processor 1962, a memory 1964, and a communication module 1966. The communication module 1966 is implemented by the processor 1962 when the processor 1962 accesses and executes a series of instructions stored in the memory 1964, the instructions defining the actions of the communication module 1966. When the instructions are executed, the communication module 1966 causes the BS 1956 to perform the actions described herein so that the network 1952 can establish, coordinate, instruct, or control relay, and possibly perform such operations in respect of UE groups. Alternatively, the communication module 1966 may be implemented using dedicated circuitry, such as an application specific integrated circuit (ASIC) or a programmed field programmable gate array (FPGA).

The UE 1954a includes a communication subsystem 1970a, two antennas 1972a and 1974a, a processor 1976a, and a memory 1978a. The UE 1954a also includes a communication module 1980a. The communication module 1980a is implemented by the processor 1976a when the processor 1976a accesses and executes a series of instructions stored in the memory 1978a, the instructions defining the actions of the communication module 1980a. When the instructions are executed, the communication module 1980a causes the UE 1954a to perform actions described herein in relation to one or more of a relay UE, a helping UE, and a remote UE. Features related to establishing and participating in a UE group may also be supported. Alternatively, the module 1980a may be implemented by dedicated circuitry, such as an ASIC or an FPGA.

The communication subsystem 1970a includes processing circuitry, transmit circuitry, and receive circuitry for sending messages from and receiving messages at the UE 1954a. Although one communication subsystem 1970a is illustrated, the communication subsystem 1970a may be multiple communication subsystems. Antenna 1972a transmits wireless communication signals to, and receives wireless communications signals from, the BS 1956. Antenna 1974a transmits sidelink communication signals to, and receives sidelink communication signals from, other UEs, including UE 1954b. In some implementations there may not be two separate antennas 1972a and 1974a. A single antenna may be used. Alternatively, there may be several antennas, but not separated into antennas dedicated only to sidelink communication and antennas dedicated only to communicating with the BS 1956.

SL communications could be over Wi-Fi, in which case the antenna 1974a may be a Wi-Fi antenna. Alternatively, the sidelink communications could be over Bluetooth^{™}, in which case the antenna 1974a may be a Bluetooth^{™} antenna. Sidelink communications could also or instead be over licensed or unlicensed spectrum.

The UE 1954b includes the same components described above with respect to the UE 1954a. That is, UE 1954b includes communication subsystem 1970b, antennas 1972b and 1974b, processor 1976b, memory 1978b, and communication module 1980b.

Figs. 18 and 19 illustrate systems in which embodiments could be implemented. In some embodiments, a UE includes a processor, such as 1976a, 1976b in Fig. 19, and a non-transitory computer readable storage medium, such as 1978a, 1978b in Fig. 19, storing programming for execution by the processor. A non-transitory computer readable storage medium could also or instead be provided separately, as a computer program product. Examples are provided elsewhere herein.

The present disclosure proposes multiple relay link configuration embodiments that may be useful to improve relay performance for a remote UE, including a number of scenarios for both in-coverage and out-of-coverage cases, with relay link coordination or cooperation.

Different ways to setup multiple relay links and configure cooperation among them are disclosed. For example, an MRL may be set up first and then used to add one or more SRLs by signaling one or more of the MRL remote UE, another relay UE, and one or more other components. Such component(s) may be signaled to cause such operations as one or more of transmission of discovery signaling and measurement feedback to be performed, for example. One or more of the MRL remote UE, relay UE(s), and helping UE(s) may also or instead be configured to transmit discovery signaling and have one or more other remote UE(s) or relay UE(s) perform one or more measurements. One or more of the MRL remote UE and relay UE(s) could negotiate with one or more other remote UE(s) or relay UE(s) to set up an SRL, or SRL configuration may be handled by network equipment such as a gNB or TRP.

Options for switching between single relay transmission and multiple relay link cooperation are also described, and may include semi-static configuration or dynamic signaling, for example. Such switching may provide flexibility, for such purposes as accommodating different needs between robustness and performance.

In addition, although described primarily in the context of methods and apparatus, other implementations are also contemplated, as instructions stored on a non-transitory computer-readable medium, for example. Such media could store programming or instructions to perform any of various methods consistent with the present disclosure.

Moreover, any module, component, or device exemplified herein that executes instructions may include or otherwise have access to a non-transitory computer readable or processor readable storage medium or media for storage of information, such as computer readable or processor readable instructions, data structures, program modules, and/or other data. A non-exhaustive list of examples of non-transitory computer readable or processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc^{™}, or other optical storage, volatile and non-volatile, removable and nonremovable media implemented in any method or technology, random-access memory (RAM), read-only memory (ROM), electrically erasable programmable read-only memory (EEPROM), flash memory or other memory technology. Any such non-transitory computer readable or processor readable storage media may be part of a device or accessible or connectable thereto. Any application or module herein described may be implemented using instructions that are readable and executable by a computer or processor may be stored or otherwise held by such non-transitory computer readable or processor readable storage media.

## Claims

1. A method performed by a base station, gNodeB, or other network equipment (202) for configuring multiple user equipment, UE, relay links for a UE (206), comprising:
coordinating, with a first relay link for a user equipment, UE, in a wireless communication network, configuration of a second relay link for the UE;
communicating signaling to enable configuration of the second relay link in accordance with the coordinating,
wherein the first relay link comprises a first relay UE (204) and the second relay link comprises a second relay UE (208),
wherein the first relay UE (204) is within a coverage area of the wireless communication network, and
wherein the UE (206) is outside the coverage area of the wireless communication network; and **characterised in that**:
the first relay link further comprises a helping remote UE (704) that is outside the coverage area of the wireless communication network and is in communication with the relay UE (204) and the UE (206).

2. The method of claim 1,
wherein the coordinating comprises determining whether a second relay link setup condition associated with the first relay link is satisfied,
wherein the communicating comprises communicating the signaling related to determining that the second relay link setup condition is satisfied.

3. The method of claim 1, wherein the communicating comprises communicating the signaling, from a component that is involved in the first relay link to another component, to cause the other component to transmit discovery signaling that enables identification of a candidate relay link for configuration as the second relay link.

4. The method of claim 1, wherein the communicating comprises transmitting discovery signaling that enables identification of a candidate relay link for configuration as the second relay link.

5. The method of claim 1,
wherein the coordinating comprises receiving signaling associated with the first relay link,
wherein the communicating comprises communicating the signaling to enable configuration of the second relay link responsive to receiving the signaling associated with the first relay link.

6. The method of claim 1, wherein the coordinating comprises receiving signaling indicative of a candidate relay link for configuration as the second relay link.

7. The method of claim 1, wherein the communicating comprises transmitting, from a component that is involved in the first relay link, configuration signaling to configure the second relay link.

8. The method of claim 1, further comprising:
determining a data split for communications with the UE over the first relay link and the second relay link.

9. The method of any preceding claim , wherein the second relay UE (208) is within the coverage area of the wireless communication network.

10. The method of claim 9, wherein the second relay link further comprises a second helping remote UE (708) that is outside the coverage area of the wireless communication network and is in communication with the second relay UE (208) of the second relay link and the UE (206).

11. The method of any one of claim 1 to claim 10, wherein the first relay link and the second relay link comprise relay links between the UE and a network device in the wireless communication network, or relay links between the UE and another UE.

12. An apparatus associated with a base station, gNodeB, or other network equipment (202) for configuring multiple user equipment, UE, relay links for a UE, (1710) comprising a processor (1700) configured to cause the base station, gNodeB, or other network equipment (202) to perform the method of any one of claims 1 to 11.

13. A computer program product comprising instructions which, when the program is executed by a computer associated with a base station, gNodeB, or other network equipment (202), cause the base station, gNodeB, or other network equipment (202) to perform the method of any one of claims 1 to 11.

## Patentansprüche

1. Verfahren, das durch eine Basisstation, einen gNodeB oder eine andere Netzwerkeinrichtung (202) durchgeführt wird, zum Konfigurieren mehrerer Relay-Verbindungen einer Benutzereinrichtung, UE, für eine UE (206), das umfasst:
Koordinieren, mit einer ersten Relay-Verbindung für eine Benutzereinrichtung, UE, in einem Drahtloskommunikationsnetzwerk, einer Konfiguration einer zweiten Relay-Verbindung für die UE;
Kommunizieren einer Signalisierung, um die Konfiguration der zweiten Relay-Verbindung gemäß dem Koordinieren zu ermöglichen,
wobei die erste Relay-Verbindung eine erste Relay-UE (204) umfasst und die zweite Relay-Verbindung eine zweite Relay-UE (208) umfasst,
wobei sich die erste Relay-UE (204) innerhalb eines Abdeckungsbereichs des Drahtloskommunikationsnetzwerks befindet und wobei sich die UE (206) außerhalb des Abdeckungsbereichs des Drahtloskommunikationsnetzwerks befindet; und
**dadurch gekennzeichnet, dass:**
die erste Relay-Verbindung ferner eine helfende Remote-UE (704), die sich außerhalb des Abdeckungsbereichs des Drahtloskommunikationsnetzwerks befindet und mit der Relay-UE (204) und der UE (206) in Kommunikation steht, umfasst.

2. Verfahren nach Anspruch 1,
wobei das Koordinieren ein Bestimmen umfasst, ob eine zweite Relay-Verbindungsaufbaubedingung, die mit der ersten Relay-Verbindung verknüpft ist, erfüllt ist,
wobei das Kommunizieren das Kommunizieren der Signalisierung, die sich auf das Bestimmen bezieht, dass die zweite Relay-Verbindungsaufbaubedingung erfüllt ist, umfasst.

3. Verfahren nach Anspruch 1, wobei das Kommunizieren das Kommunizieren der Signalisierung von einer Komponente, die an der ersten Relay-Verbindung beteiligt ist, an eine andere Komponente umfasst, um die andere Komponente zu veranlassen, eine Erkennungssignalisierung, die eine Identifizierung einer Kandidaten-Relay-Verbindung für die Konfiguration als die zweite Relay-Verbindung ermöglicht, zu übertragen.

4. Verfahren nach Anspruch 1, wobei das Kommunizieren das Übertragen der Erkennungssignalisierung, die die Identifizierung einer Kandidaten-Relay-Verbindung für die Konfiguration als die zweite Relay-Verbindung ermöglicht, umfasst.

5. Verfahren nach Anspruch 1,
wobei das Koordinieren ein Empfangen der Signalisierung, die mit der ersten Relay-Verbindung verknüpft ist, umfasst,
wobei das Kommunizieren das Kommunizieren der Signalisierung umfasst, um die Konfiguration der zweiten Relay-Verbindung als Reaktion auf das Empfangen der Signalisierung, die mit der ersten Relay-Verbindung verknüpft ist, zu ermöglichen.

6. Verfahren nach Anspruch 1, wobei das Koordinieren das Empfangen der Signalisierung, die eine Kandidaten-Relay-Verbindung für die Konfiguration als die zweite Relay-Verbindung angibt, umfasst.

7. Verfahren nach Anspruch 1, wobei das Kommunizieren das Übertragen, von einer Komponente, die an der ersten Relay-Verbindung beteiligt ist, einer Konfigurationssignalisierung, um die zweite Relay-Verbindung zu konfigurieren, umfasst.

8. Verfahren nach Anspruch 1, das ferner umfasst:
Bestimmen einer Datenaufteilung für die Kommunikation mit der UE über die erste Relay-Verbindung und die zweite Relay-Verbindung.

9. Verfahren nach einem der vorstehenden Ansprüche, wobei sich die zweite Relay-UE (208) innerhalb des Abdeckungsbereichs des Drahtloskommunikationsnetzwerks befindet.

10. Verfahren nach Anspruch 9, wobei die zweite Relay-Verbindung ferner eine zweite helfende Remote-UE (708), die sich außerhalb des Abdeckungsbereichs des Drahtloskommunikationsnetzwerks befindet und mit der zweiten Relay-UE (208) der zweiten Relay-Verbindung und der UE (206) in Kommunikation steht, umfasst.

11. Verfahren nach einem der Ansprüche 1 bis 10, wobei die erste Relay-Verbindung und die zweite Relay-Verbindung Relay-Verbindungen zwischen der UE und einem Netzwerkgerät in dem Drahtloskommunikationsnetzwerk oder Relay-Verbindungen zwischen der UE und einer anderen UE umfassen.

12. Vorrichtung, die mit einer Basisstation, einem gNodeB oder einer anderen Netzwerkeinrichtung (202) zum Konfigurieren mehrerer Relay-Verbindungen der Benutzereinrichtung, UE, für eine UE (1710) verknüpft ist, die einen Prozessor (1700), der konfiguriert ist, um die Basisstation, den gNodeB oder die andere Netzwerkeinrichtung (202) zu veranlassen, das Verfahren nach einem der Ansprüche 1 bis 11 durchzuführen, umfasst.

13. Computerprogrammprodukt, das Anweisungen umfasst, die, wenn das Programm durch einen Computer, der mit einer Basisstation, einem gNodeB oder einer anderen Netzwerkeinrichtung (202) verknüpft ist, ausgeführt wird, die Basisstation, den gNodeB oder die andere Netzwerkeinrichtung (202) veranlassen, das Verfahren nach einem der Ansprüche 1 bis 11 durchzuführen.

## Revendications

1. Procédé réalisé par une station de base, gNodeB, ou un autre équipement de réseau (202) permettant de configurer de multiples liaisons relais d'équipement utilisateur, UE, pour un UE (206), comprenant :
la coordination, avec une première liaison relais pour un équipement utilisateur, UE, dans un réseau de communication sans fil, d'une configuration d'une seconde liaison relais pour l'UE ;
la communication d'une signalisation pour permettre une configuration de la seconde liaison relais conformément à la coordination,
dans lequel la première liaison relais comprend un premier UE relais (204) et la seconde liaison relais comprend un second UE relais (208),
dans lequel le premier UE relais (204) se trouve dans une zone de couverture du réseau de communication sans fil, et dans lequel l'UE (206) se trouve en dehors de la zone de couverture du réseau de communication sans fil ; et **caractérisé en ce que** :
la première liaison relais comprend en outre un UE distant aidant (704) qui se trouve en dehors de la zone de couverture du réseau de communication sans fil et qui est en communication avec l'UE relais (204) et l'UE (206).

2. Procédé selon la revendication 1,
dans lequel la coordination comprend le fait de déterminer si une seconde condition d'établissement de liaison relais associée à la première liaison relais est satisfaite,
dans lequel la communication comprend la communication de la signalisation liée au fait de déterminer que la seconde condition d'établissement de liaison relais est satisfaite.

3. Procédé selon la revendication 1, dans lequel la communication comprend la communication de la signalisation, à partir d'un composant impliqué dans la première liaison relais, à un autre composant, pour amener l'autre composant à transmettre une signalisation de découverte qui permet l'identification d'une liaison relais candidate pour une configuration en tant que seconde liaison relais.

4. Procédé selon la revendication 1, dans lequel la communication comprend la transmission d'une signalisation de découverte qui permet l'identification d'une liaison relais candidate pour une configuration en tant que seconde liaison relais.

5. Procédé selon la revendication 1,
dans lequel la coordination comprend la réception d'une signalisation associée à la première liaison relais,
dans lequel la communication comprend la communication de la signalisation pour permettre la configuration de la seconde liaison relais en réponse à la réception de la signalisation associée à la première liaison relais.

6. Procédé selon la revendication 1, dans lequel la coordination comprend la réception d'une signalisation indiquant une liaison relais candidate pour une configuration en tant que seconde liaison relais.

7. Procédé selon la revendication 1, dans lequel la communication comprend la transmission, à partir d'un composant impliqué dans la première liaison relais, d'une signalisation de configuration pour configurer la seconde liaison relais.

8. Procédé selon la revendication 1, comprenant en outre :
la détermination d'une répartition de données pour des communications avec l'UE sur la première liaison relais et la seconde liaison relais.

9. Procédé selon l'une quelconque revendication précédente, dans lequel l'UE du second relais (208) se trouve dans la zone de couverture du réseau de communication sans fil.

10. Procédé selon la revendication 9, dans lequel la seconde liaison relais comprend en outre un second UE distant aidant (708) qui se trouve en dehors de la zone de couverture du réseau de communication sans fil et qui est en communication avec le second UE relais (208) de la seconde liaison relais et l'UE (206).

11. Procédé selon l'une quelconque des revendications 1 à 10, dans lequel la première liaison relais et la seconde liaison relais comprennent des liaisons relais entre l'UE et un dispositif de réseau dans le réseau de communication sans fil, ou des liaisons relais entre l'UE et un autre UE.

12. Appareil associé à une station de base, gNodeB, ou à un autre équipement de réseau (202) pour configurer de multiples liaisons relais d'équipement utilisateur, UE, pour un UE, (1710) comprenant un processeur (1700) configuré pour amener la station de base, gNodeB, ou un autre équipement de réseau (202) à réaliser le procédé selon l'une quelconque des revendications 1 à 11.

13. Produit-programme informatique comprenant des instructions qui, lorsque le programme est exécuté par un ordinateur associé à une station de base, gNodeB, ou à un autre équipement de réseau (202), amènent la station de base, gNodeB, ou un autre équipement de réseau (202) à réaliser le procédé selon l'une quelconque des revendications 1 à 11.
